# EUROPEAN PATENT SPECIFICATION

(11) **EP 3 016 886 B1**
(45) Date of publication and mention of the grant of the patent: **22.08.2018**
(21) Application number: 14819737.9
(22) Date of filing: 03.07.2014
(51) Int. Cl.: A61J 7/00, A61J 7/04, B65D 83/04, A61J 1/03

(54) **MEDICINE CONTAINER, METHOD OF ASSEMBLING THE CONTAINER, AND METHOD OF DISPENSING THE MEDICINE FROM THE CONTAINER**
ARZNEIMITTELBEHÄLTER, VERFAHREN ZUM ZUSAMMENBAU DES BEHÄLTERS UND VERFAHREN ZUR AUSGABE DES ARZNEIMITTELS AUS DEM BEHÄLTER
RÉCIPIENT POUR MÉDICAMENTS, PROCÉDÉ D'ASSEMBLAGE DU RÉCIPIENT, ET PROCÉDÉ DE DISTRIBUTION DU MÉDICAMENT À PARTIR DU RÉCIPIENT

(30) Priority: 03.07.2013 US 201361842841 P; 03.07.2013 US 201361842900 P; 16.04.2014 US 201461488207 P
(43) Date of publication of application: 11.05.2016
(60) Divisional application: 18163040.1
(73) Proprietor: Abbvie Inc., North Chicago, IL 60064 (US)
(72) Inventor: UPCHURCH, Guy, North Chicago Illinois 60064 (US); FINCH, John, North Chicago Illinois 60064 (US)
(74) Representative: Cabinet Plasseraud
(86) International application number: PCT/US2014/045459
(87) International publication number: WO 2015/003158

(56) References cited:
- EP-A1- 1 481 914
- US-A1- 2003 042 167
- US-B1- 6 273 260
- US-B2- 6 659 280
- US-B2- 7 360 652

## Description

### CROSS-REFERENCE TO RELATED APPLICATIONS

This application is a non-provisional of and claims the benefit of U.S. Provisional Patent Application No. 61/842,841, filed on July 3, 2013, and U.S. Provisional Patent Application No. 61/842,900, filed on July 3, 2013. This application also is a continuation of U.S. Patent Application No. 29/488,207, filed on April 16, 2014.

### BACKGROUND OF THE INVENTION

Prescription medicines require a prescription prepared by a person authorized to prescribe medicine. A prescription medicine is dispensed by a pharmacist, and the prescription medicine typically comes with an information leaflet providing information about the medicine, its side effects, if any, instructions for use of the medicine, and any relevant cautions and warnings.

Most prescription medicines are dispensed by a pharmacist in a bottle or in a blister pack. Some prescription medicines that are dispensed in this manner have complicated instructions for use and may not be easy for a patient to remember. For example, some prescription medicines are to be taken in the morning, afternoon, or evening, some with or without food, some with or without certain types of food, and particular quantities. In these situations, a patient may need to read the bottle or refer back to the information leaflet for instructions when taking the medicine. A patient also may need to keep a log of when he or she took the medicine to ensure compliance with any timing instructions.

### SUMMARY OF THE INVENTION

The present invention relates to a system and a container for securing and dispensing medicine that provides instructions for use that are visible upon access to and administration of the medicine. In particular, the invention relates to a container, which secures medicine and is child-resistant thereby preventing children from accessing the medicine enclosed within the container. The invention also relates to a method for assembling the child-resistant container. The invention also relates to a method for accessing or dispensing, by an intended user, the medicine secured within the child-resistant container.

Medication packaging is regulated by the government in an effort to ensure that the packaging is substantially child-resistant. Each medication package is constructed to meet specific criteria that are based on the contents within the package and the type and potency of the medication.

The publication US 6,659,280 discloses a multi-layered child resistant blister package made of a single sheet, and can be regarded as the prior art document closest to the invention.

In one embodiment, the invention provides a child-resistant medication container assembly. The assembly comprises a blister pack including a plurality of compartments, each of the plurality of compartments configured to support at least one medication; a puck including a recess having a plurality of openings with each opening in the puck corresponding to one of the plurality of compartments of the blister pack; and a box including a first wall opposite a second wall, a plurality of openings extending through the first wall, each of the openings in the first wall being aligned with corresponding perforations in the second wall, each of the openings in the first wall being aligned with one of the openings in the puck and a corresponding compartment of the blister pack.

In another embodiment the invention provides a method of assembling a child-resistant medication container. The method comprises aligning a blister pack including a plurality of compartments with a puck including a recess and a plurality of openings, each of the plurality of openings configured to be complementary to one of the plurality of compartments; attaching the blister pack to the puck; inserting the blister pack and the puck into a box, the box including a first wall opposite a second wall, a plurality of openings extending through the first wall and being aligned with a plurality of perforations in the second wall, each of the aligned plurality of openings and perforations being complementary to one of the plurality of compartments; and closing the box to enclose the blister pack and the puck.

In another embodiment the invention provides a method of dispensing medication secured within a child-resistant medication container to a user. The method comprises providing a container including a box, a puck, and a blister pack, the puck being secured to the box, and the blister pack being secured to the puck; applying a force to at least one compartment of a plurality of compartments of the blister pack, each of the plurality of compartments being aligned with a complementary one of a plurality of openings in a first wall of the box; breaking a seal of the at least one compartment to move medication contained within the at least one compartment; expelling the medication through an opening in the recess of the puck, the opening being complementary to the at least one compartment; and expelling the medication through a perforation in a second wall of the box, the perforation being complementary to the at least one compartment.

Other aspects of the invention will become apparent by consideration of the detailed description and accompanying drawings.

### BRIEF DESCRIPTION OF THE DRAWINGS

Fig. 1 is a front perspective view of a medicine container assembly according to one embodiment of the invention.
Fig. 2 illustrates components of the medicine container illustrated in Fig. 1 including a blister pack, a puck, and a box.
Fig. 3 is a front perspective view of a medicine container assembly in a first configuration according to another embodiment of the invention.
Fig. 4 is a front perspective view of the container illustrated in Fig. 3 in a second configuration.
Fig. 5 is a front perspective view of an exemplary blister pack.
Fig. 6 illustrates engineering drawing specifications of the exemplary blister pack of Fig. 5.
Figs. 7 and 8 are front perspective views of a blister pack having another configuration.
Fig. 9 is a bottom perspective view of the blister packs illustrated in Figs. 7 and 8.
Fig. 10 illustrates engineering drawing specifications of the blister pack of Figs. 7 and 8.
Fig. 11 is a front perspective view of a blister pack having another configuration.
Fig. 12 is a perspective view of an exemplary puck.
Fig. 13 is a top view of the puck illustrated in Fig. 12.
Fig. 14 is a bottom view of the puck illustrated in Figs. 12-13.
Fig. 15 is a top perspective view of an exemplary puck.
Fig. 16 is a bottom perspective view of the puck in Fig. 15.
Fig. 17 is a bottom view of the puck illustrated in Fig. 15.
Fig. 18 is a top view of the puck illustrated in Figs. 15-16.
Fig. 19 is a perspective view of an exemplary puck.
Fig. 20 is a bottom perspective view of the puck in Fig. 19.
Fig. 21 is a bottom view of the puck in Fig. 19.
Fig. 22 is a top view of the puck illustrated in Fig. 19.
Fig. 23 is a rear view of the puck illustrated in Fig. 19.
Fig. 24 is a front view of the puck illustrated in Fig. 19.
Fig. 25 is a left side view of the puck illustrated in Fig. 19.
Fig. 26 is a right side view of the puck illustrated in Fig. 19.
Fig. 27 is a front perspective view of an exemplary puck.
Fig. 28 is a front perspective view of an exemplary puck.
Fig. 29 is a front perspective view of an exemplary puck.
Fig. 30 is a front perspective view of an exemplary puck.
Fig. 31 is a front perspective view of an exemplary puck.
Fig. 32 illustrates an exemplary box blank.
Fig. 33 is an assembly view of the medicine container assembly illustrated in Figs. 3-4 including the blister pack of Figs. 5-6, the puck of Figs. 19-26, and a box.
Fig. 34 is a perspective view of the blister pack and puck illustrated in Fig. 33 when assembled.
Fig. 35 illustrates a method for assembling the medicine container assembly of Fig. 33.
Fig. 36 illustrates a method of use of the medicine container assembly of Fig. 33.
Fig. 37 illustrates exemplary user instructions indicating the method of use of the medicine container assembly of Fig. 36.
Fig. 38 is a front perspective view of a dispenser of a medicine container assembly.
Fig. 39 is a front perspective view of a dispenser having another configuration.
Fig. 40 is a front view of the dispenser illustrated in Fig. 39.
Fig. 41 is a front perspective view of a dispenser of a medicine container assembly illustrated in Figs. 3-4.
Fig. 42 is illustrates an exemplary box blank of the dispenser.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

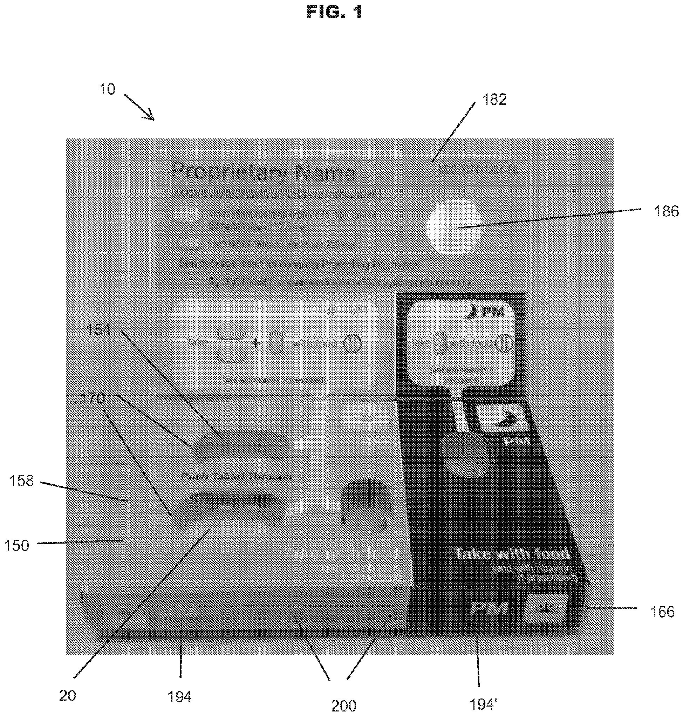

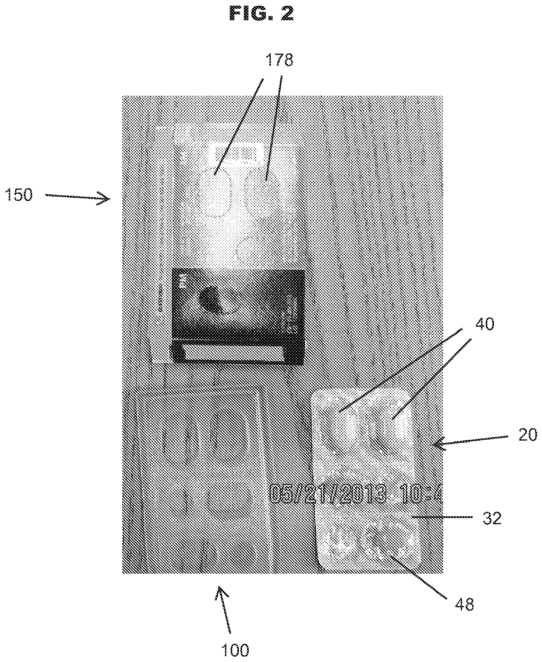

Figs. 1 and 2 illustrate a container assembly or package 10 for medication according to a first embodiment of the invention. The medication may be acquired by prescription or available over-the-counter. The container assembly 10 includes a blister pack 20, a puck 100, and a box 150.

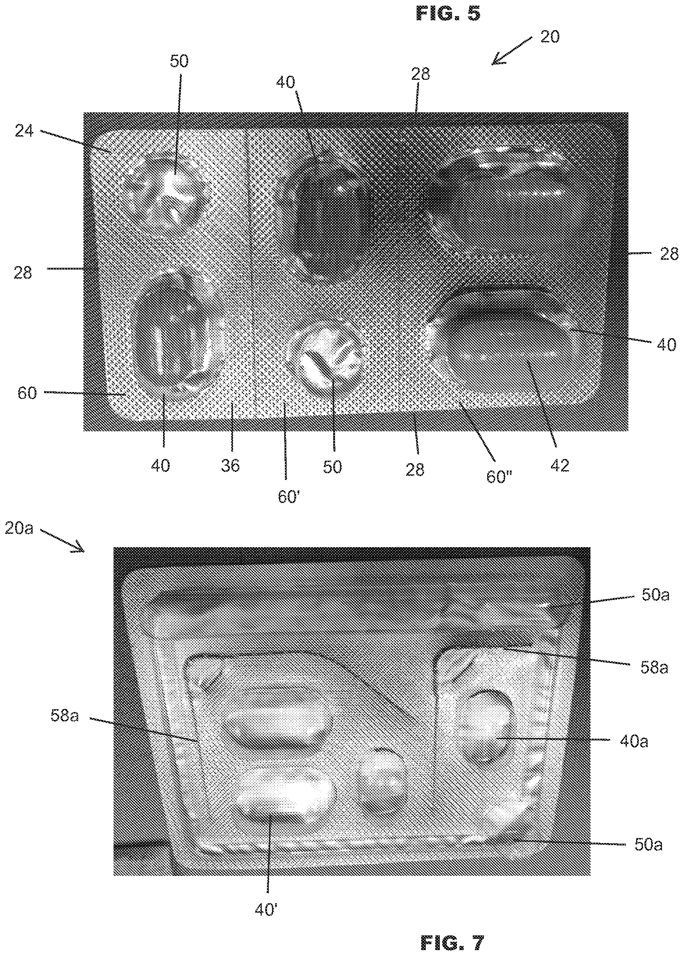

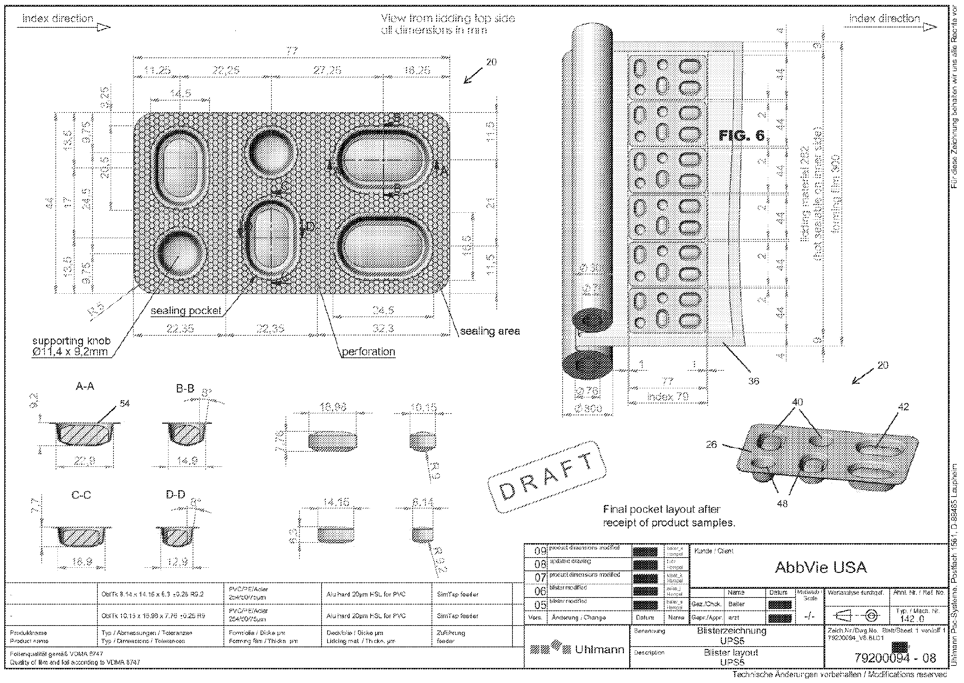

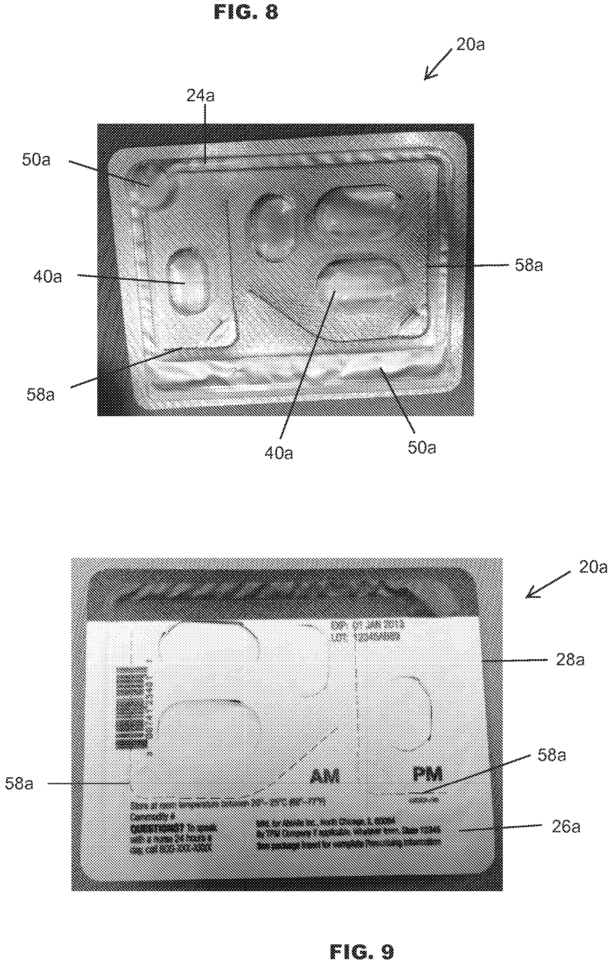

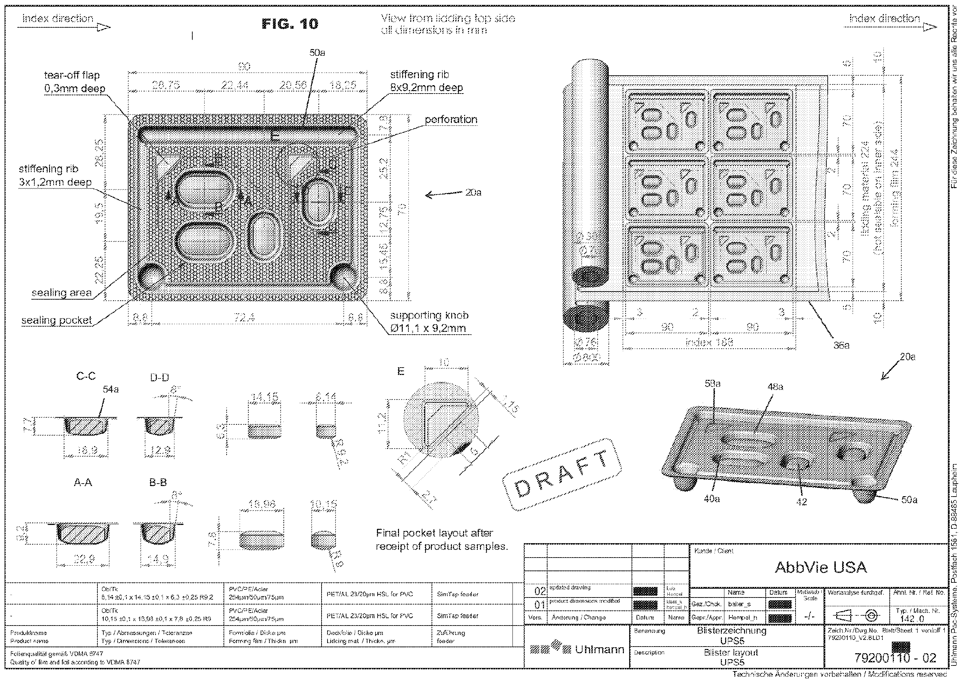

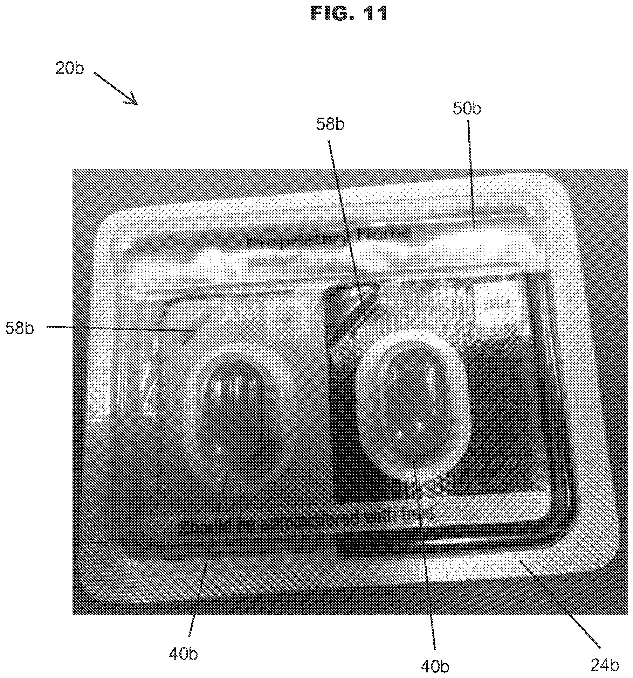

As illustrated in Figs. 5-11, the blister pack or card 20 includes a first side 24, a second side 26, and outer walls 28 that define a perimeter of the blister pack 20. The blister pack 20 is constructed from a semi-rigid plastic film or member 32 having a foil and/or paper layer 36 adhered to the second side 26 thereof. The blister pack 20 includes a plurality of compartments or pockets 40 formed within the member 32 and sized and shaped to receive a pill-form of a medication 42 therein. The compartments 40 are defined by the semi-rigid plastic film and protrude from the first side 24 of the blister pack 20. As such, the compartments 40 define a height of the blister pack 20. The compartments 40 also define an opening 48 on the second side 26 of the blister pack 20 prior to adhering the film layer 36 in order to insert the at least one medication 42 therein. As illustrated in Figs. 5 and 6, one or more of the compartments 40 may be empty when sealed thereby defining one or more air pockets or supporting knobs 50 in the blister pack 20. The foil layer 36 overlays the openings 48 when adhered to the second side 26 of the blister pack 20 thereby creating a seal 54 for securing the doses of medication 42 or the air pockets 48 in the appropriate compartment 40. The medication 42 secured in each of the plurality of compartments 40 is accessible by applying pressure to the desired compartment on the first side 24 of the blister pack 20 and thereby puncturing the seal 54 of the compartment 40. The medication is released through the opening 48 of the second side 26

The seals 54 are created by a vacuum in order to enclose the medication 42 within the compartments 40. In the illustrated embodiments, the seals 54 and the compartments 40 enclose the medications 42 such that each of the doses of medication 40 is surrounded and protected by a surrounding air pocket. The air pocket protects the integrity of the dose of medication 40 (e.g., protects the medication from being crushed or prematurely expiring). The foil layer 36 includes one or more perforations or indentations to provide a point where an intended user may push the dose of medication 40 through the foil layer 36 in order to free the medication from the blister pack 20. Alternative or additional embodiments may include blister packs constructed from any suitable material(s) (e.g., cardboard, foam, etc.). Similarly, the compartments may be sealed using suitable alternative methods or materials.

As illustrated in Figs. 5-11, the blister pack 20 may have a variety of suitable configurations, such as for example blister packs 20, 20a, 20b. The compartments 40 of the blister packs 20, 20a, 20b have a variety of sizes and shapes in order to accommodate different types, sizes, and doses of medications 40. For example, the compartments 40 may be circular, ovular, cuboidal, rectangular, and the like. Similarly, the blister pack may include compartments including any suitable combination of shapes and sizes. In other words, because a dose of medication in the form of a pill or capsule may have many sizes and shapes, the blister pack can be manufactured to accommodate the specific size and shape of one or more types of medications. Further, many medications are adapted to be taken multiple times a day, at specific times of the day, and/or in combination with other medications. Therefore, each of the compartments may be sized and shaped to receive different types of medications and in any suitable orientation to specify an order or series of administration. The second side 26 of the blister pack, and specifically the foil layer(s), may have many different configurations of perforations 58. For example, the perforations 58b may be located at each compartment 40. Alternatively, the perforations 58a may be configured so that only certain compartments 40 are punctured at a time, which will be discussed in greater detail below. The perforations 58 may also aid the user is administering the correct medications at the correct times. Furthermore, the air pockets or support knobs 50 may have alternative positions and configurations. For example, support knobs may be elongated air pockets or ribs 50. The ribs may extend along one or more sides of the blister pack, for example, or may be oriented in other ways relative to one or more of the compartments containing medication. Additionally, support knobs and support ribs may be used together in some embodiments.

Figs. 5-11 also illustrate that the blister pack 20, 20a, 20b may be divided into regions or sections 60. For example, in Figs. 5 and 6, the blister pack 20 is divided into a first region 60, a second region 60', and a third region 60". Each of the first, second, and third regions 60, 60', 60" include at least one of the compartments 40 of the blister pack 20. In the embodiment illustrated in Figs. 5 and 6, the regions 60, 60', 60" may be separated from one another at a perforated edge or otherwise weakened lines 64 when they are used. In other words, the first region 60 may be torn away from the second and third regions 60', 60". As such, the user may remove the medication(s) within a particular region that may correspond to a certain dosage, combination or time period. The advantage of such a blister pack 20 is that specific medications can be removed from the corresponding compartments 40 without unintentionally puncturing the seals 54 of other, adjacent compartments. Regions of the blister pack may also be delineated by perforations in the second side of the blister pack. For example, Figs. 7-10 include first and second perforations 58a. The perforations 58a are configured to provide easy access to the medications of the first region 60a while preserving the integrity of the seals 54a securing the medications of the second region 60a'. In addition to being physically delineated, regions of the blister packs 20 may be color-coded or provided with some other type of indicia to indicate and obviate the difference in the types of medication contained within each region or group of medications.

As noted above with respect to Figs. 1 and 2, the container assembly 10 includes the puck or template 100. The puck 100 is configured to be complementary to the compartments 40 of the blister pack 20. The puck 100 is a protective device or spacer component that provides a buffer between the blister pack 20 and the box 150. More particularly, the puck 100 provides rigidity to the finished box, deterring children from bending and breaking the perforations on the box around the medication while providing bite protection for the blister pack 20.

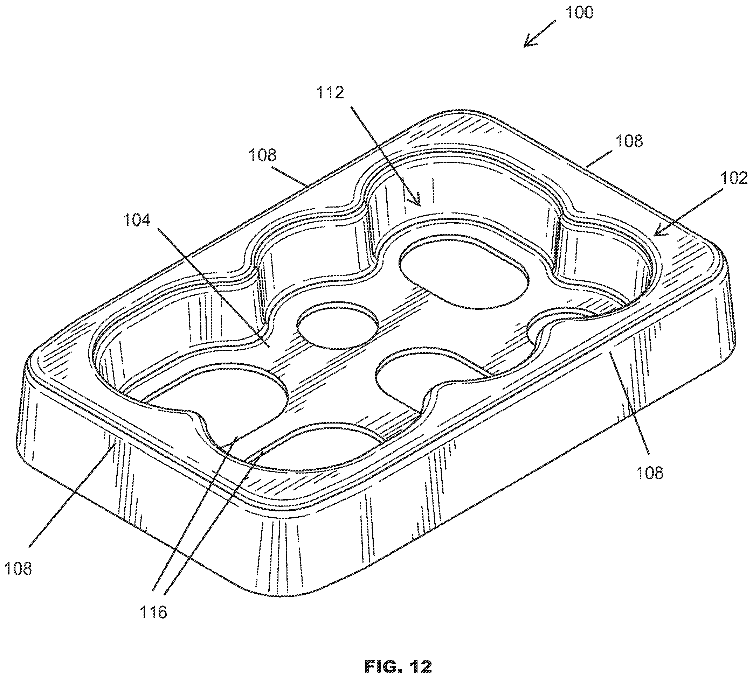

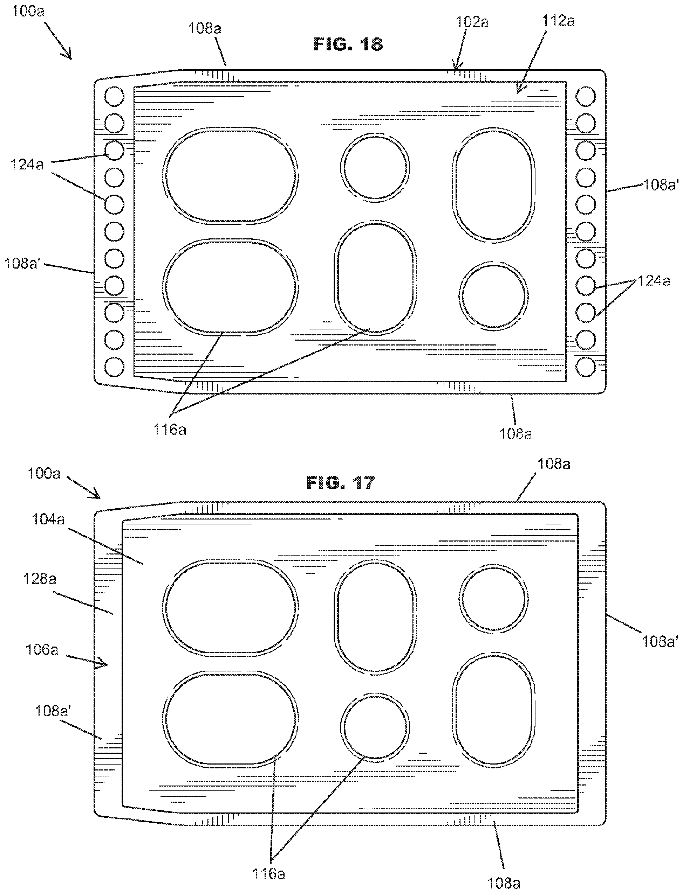

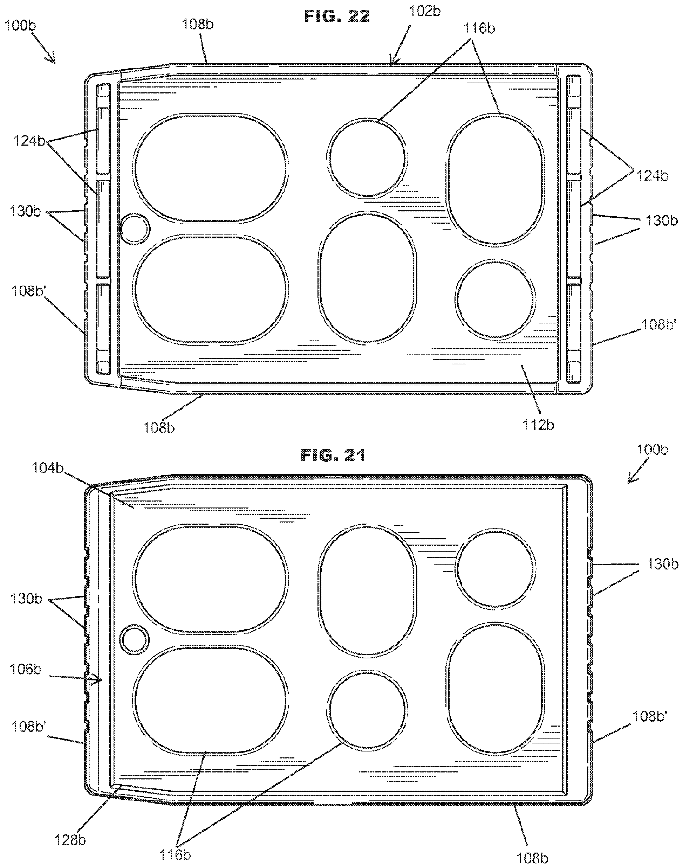

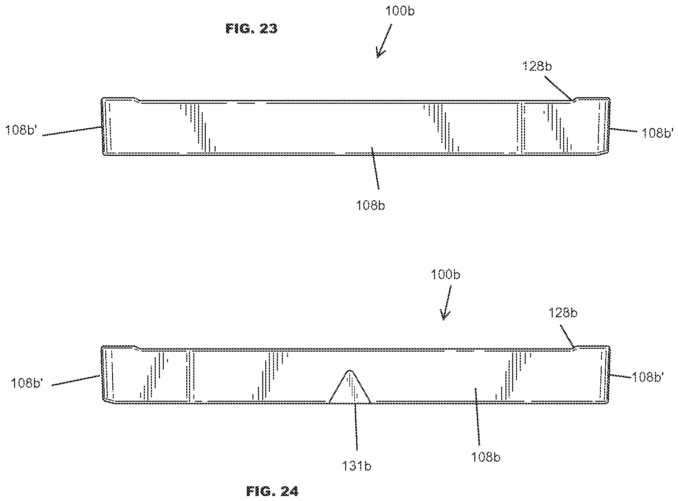

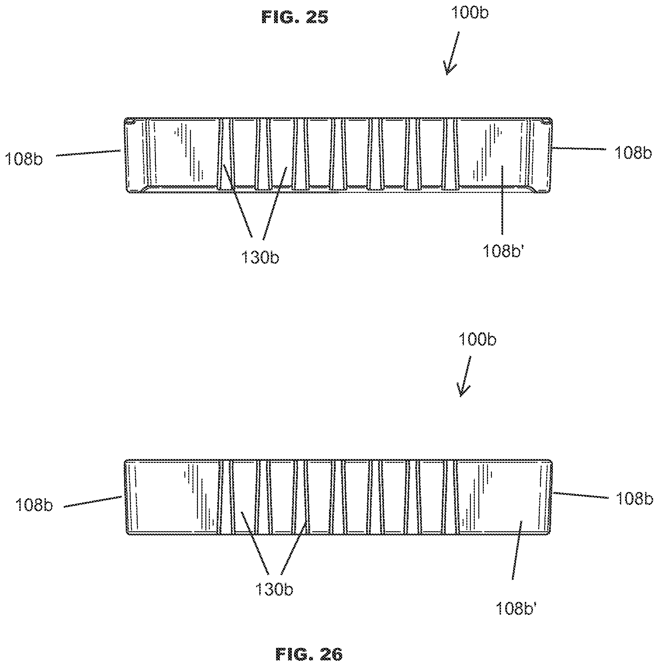

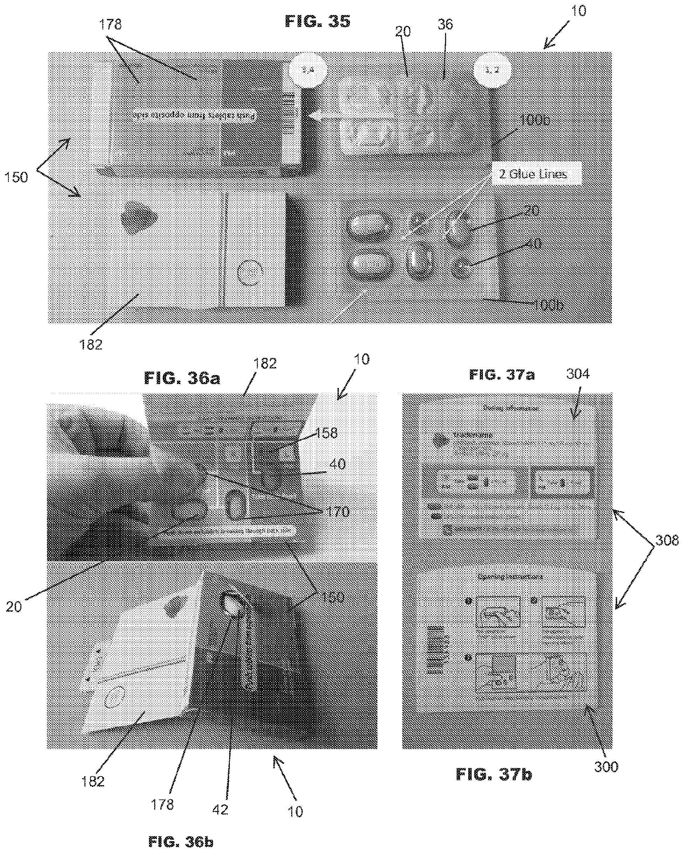

Figures 12-26 illustrated three different pucks 100. Figs. 12-14 illustrate a first embodiment of the puck 100. The puck 100 includes a body portion 104 having a first side 102 spaced apart and opposite a second side 106. The body 104 also includes walls 108 extending between the first and second sides. The walls 108 define a height of the puck 100. The puck 100 also includes a recess 112 in the body 104. The puck 100 includes a plurality of openings 116 formed within the recess 112. Each of the plurality of openings 116 in the puck 100 is complementary to one of the compartments 40 of the blister pack 20, described above. As such, the openings 116 in the puck 100 are configured to align with the compartments 40 on the blister pack 20 having a specific orientation. For example, the puck 100 of Figs. 12-14 is specifically configured to accommodate the blister pack 20 illustrated in Figs. 5 and 6. The blister pack 20 is coupled to the second side 106 of the puck 100 such that each of the compartments 40 is inserted through the respective complementary opening 116 in the puck 100. In some constructions, the blister pack 20 is applied (e.g., glued, sealed, taped, etc.) to the second side 106 of the puck 100 (this is shown in Fig. 35 as well).

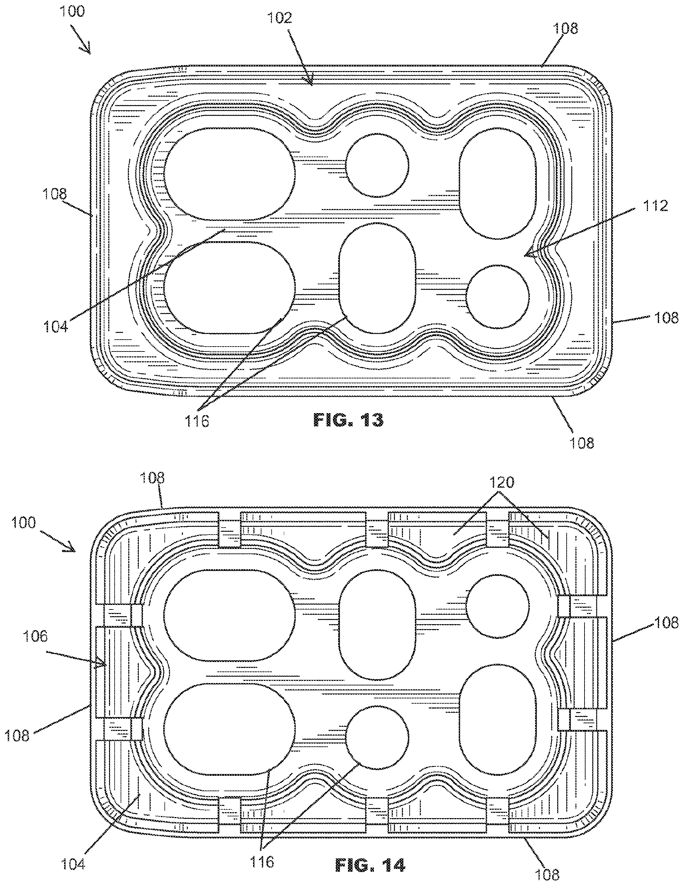

With continued reference to Figs. 12-14, the second side 106 of the body 104 includes a plurality of reinforced cavities 120 extending between the walls 108 and the recess 112. In other embodiments, the second side 106 may be solid. Additionally, Figs. 13 and 14 include walls 108 that each have substantially the same thickness. However, alternate or additional embodiments may include walls having different thicknesses. The puck 100 can comprise paper pulp or other paper based substrates, however other materials, such as, plastic, or other suitable materials or combinations of materials may also be utilized in puck 100.

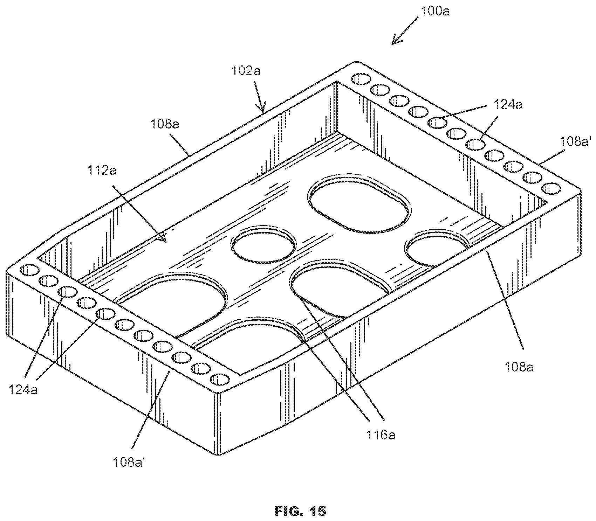

Figures 15-18 illustrate a second embodiment of the puck (referred to as puck 100a). The puck 100a includes a body portion 104a having a first side 102a spaced apart and opposite a second side 106a. The body 104a also includes walls 108a extending between the first and second sides. The walls 108a, 108a' define a height of the puck 100a. The puck 100a also includes a recess 112a in the body 104a. The puck 100a includes a plurality of openings 116a formed within the recess 112a. Each of the plurality of openings 116a in the puck 100a is complementary to one of the compartments 40 of the blister pack 20, described above. As such, the openings 116a in the puck 100a are configured to align with the compartments 40 on the blister pack 20 having a specific orientation. For example, the puck 100a of Figs. 15-18 is specifically configured to accommodate the blister pack 20 illustrated in Figs. 5 and 6. The blister pack 20 is coupled to the second side 106a of the puck 100a such that each of the compartments 40 is inserted through the respective complementary opening 116a in the puck 100a. In some constructions, the blister pack 20 is applied (e.g., glued, sealed, taped, etc.) to the second side 106a of the puck 100a (this is shown in Fig. 35 as well).

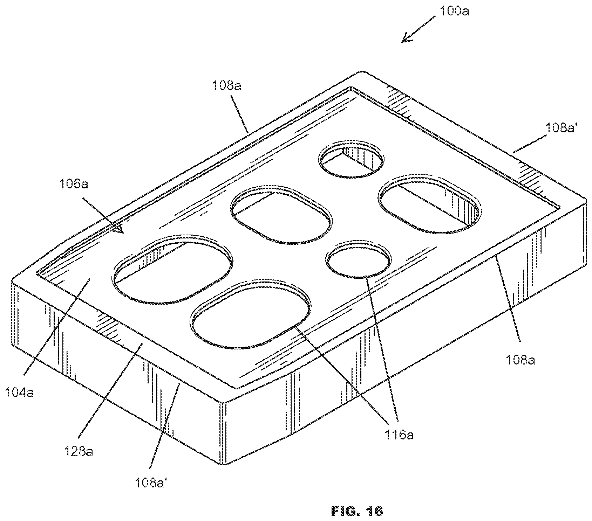

With continued reference to Figs. 15-18, the walls 108a and 108a' have varying thicknesses. For example, the thickness of the wall 108a is different than the thickness of the wall 108a'. As illustrated, the thickness of the wall 108a is less than the thickness of the wall 108a'. The walls 108a' also includes a plurality of apertures 124a. The apertures 124a are cylindrical, and while eleven cylindrical apertures are illustrated, there may be fewer or more cylindrical apertures in other constructions. The walls 108a, 108a' form a raised rim 128a around a perimeter of the bottom wall (see Figs. 16-17). The walls 108a angle inwardly at one end of the puck 100a. The angled portion of the wall 108a allows for easier insertion of the puck 100a into the box 150. The puck 100a can comprise plastic and be manufactured using an injection molding process, however, other suitable materials or combinations of materials may also be utilized for the puck 100a.

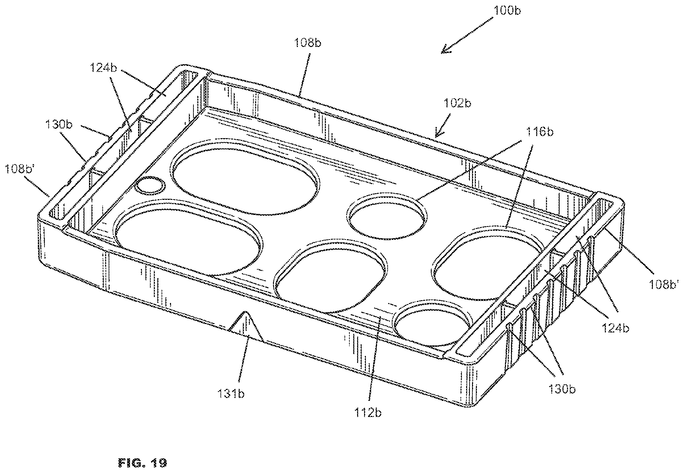

Figures 19-26 illustrate a third embodiment of the puck (referred to as puck 100b). The puck 100b includes a body portion 104b having a first side 102b spaced apart and opposite a second side 106b. The body 104b also includes walls 108b extending between the first and second sides. The walls 108b, 108b' define a height of the puck 100b. The puck 100b also includes a recess 112b in the body 104b. The puck 100b includes a plurality of openings 116b formed within the recess 112b. Each of the plurality of openings 116b in the puck 100b is complementary to one of the compartments 40 of the blister pack 20, described above. As such, the openings 116b in the puck 100b are configured to align with the compartments 40 on the blister pack 20 having a specific orientation. For example, the puck 100b of Figs. 19-26 is specifically configured to accommodate the blister pack 20 illustrated in Figs. 5 and 6. The blister pack 20 is coupled to the second side 106b of the puck 100b such that each of the compartments 40 is inserted through the respective complementary opening 116b in the puck 100b. In some constructions, the blister pack 20 is applied (e.g., glued, sealed, taped, etc.) to the second side 106a of the puck 100b (this is shown in Fig. 35 as well).

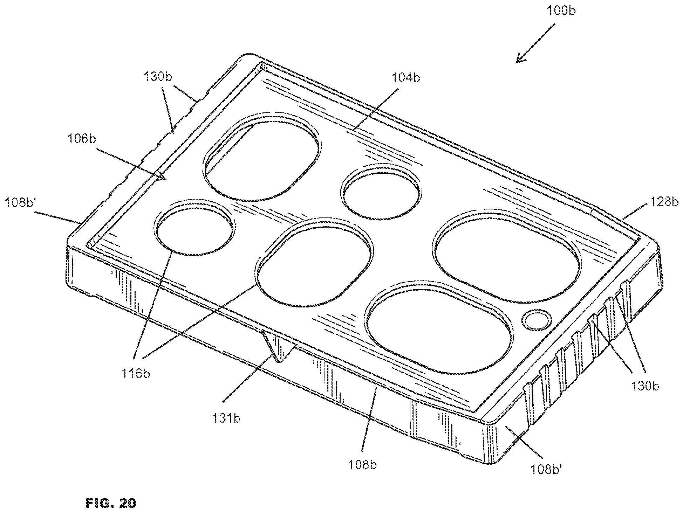

With continued reference to Figs. 19-26, the walls 108b and 108b' have varying thicknesses. For example, the thickness of the wall 108b is different than the thickness of the wall 108b'. As illustrated, the thickness of the wall 108b is less than the thickness of the wall 108b'. The walls 108b' also includes a plurality of apertures 124b. The apertures 124b are rectangular, and while three rectangular apertures are illustrated, there may be fewer or more rectangular apertures in other constructions. The walls 108b, 108b' form a raised rim 128b around a perimeter of the bottom wall (see Figs. 20-21). The walls 108b angle inwardly at one end of the puck 100b. The angled portion of the wall 108b allows for easier insertion of the puck 100b into the box 150.

The walls 108b, 108b' include a ribbed surface 130b at the outer ends of the walls. The ribbed surface 130b provides a larger surface area for application of glue or other bonding material(s) for securing the puck 100b to the box 150. The puck 100b can comprise plastic, and be manufactured using an injection molding process, however, other suitable materials or combinations of materials may also be utilized for the puck 100b.

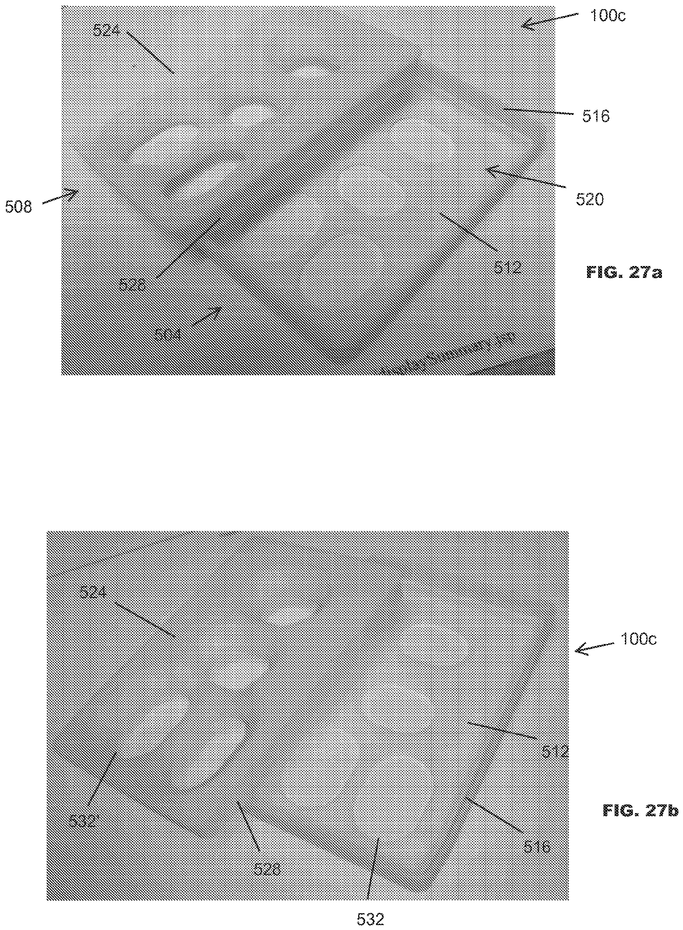

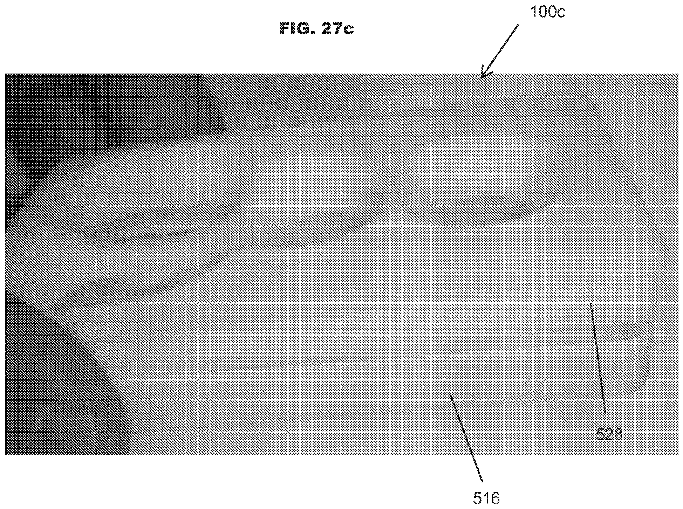

Figure 27 illustrates a fourth embodiment of the puck (referred to as puck 100c). The puck 100c includes a first portion 504 and a second portion 508 that are configured to couple together as illustrated. For example, the first portion 504 has a bottom wall 512 and a side wall 516 that extends around a perimeter of the bottom wall 512 thereby defining a recess 520. The second portion 508 includes a top wall 524 having a defined perimeter and a side wall 528 that extends from the top wall 524 at a position inset from the perimeter. The top wall 524 includes a overhang that extends over or beyond the side wall 528 and that rests on the top of the side wall 516. This configuration allows the side wall 528 of the second portion 508 to slide or fit within the recess 520 of the first portion 504.

The first portion includes a plurality of openings 532 positioned within the bottom wall 512. The second portion includes a plurality of openings 532' positioned within the top wall 524 and substantially aligned with the openings 532. An area 536 around each of the plurality of openings 532' is scalloped where a portion of the top wall 524 is gradually removed with less material being removed as the area transitions from the opening 532'and moving outwardly. The blister pack 20a is positioned between the first portion 504 and the second portion 508 and the compartments aligned with the openings 532, 532' before inserting the puck 100c into the box 150.

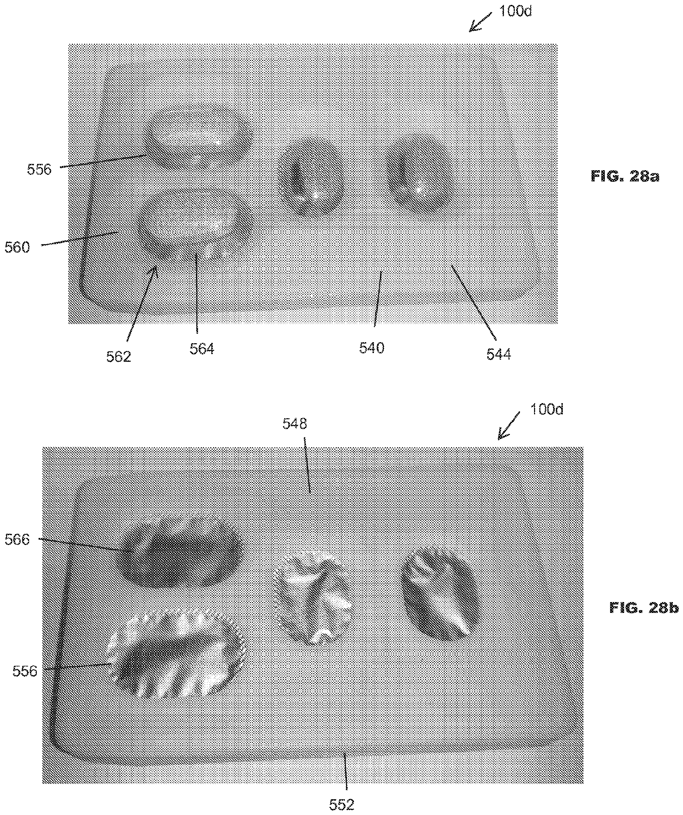

Figure 28 illustrates a fifth embodiment of the puck (referred to as puck 100d). The puck 100d includes a base 540 having a top surface 544 and a bottom surface 548 thereby defining a thickness therebetween. The base 540 includes a sidewall 552 extending between the top surface 544 and the bottom surface 548 and defining a perimeter. The side wall 552 may be angled at an end of the base 540. The base 540 includes a plurality of openings 556. The top surface 544 includes an area 560 around all of the openings 556 that is scalloped where a portion of the top surface 544 is gradually removed with less material being removed as the area transitions from the opening 556 and moving outwardly.

The puck 100d includes a plurality of individual compartments 562 formed by a first layer of material 564 and a second layer of material 566. The individual compartments 562 support the medication, and the first and second layers of material are secured to the base 540. After the medication and compartments 562 are secured to the base 540, the puck 100d is inserted into the box 150.

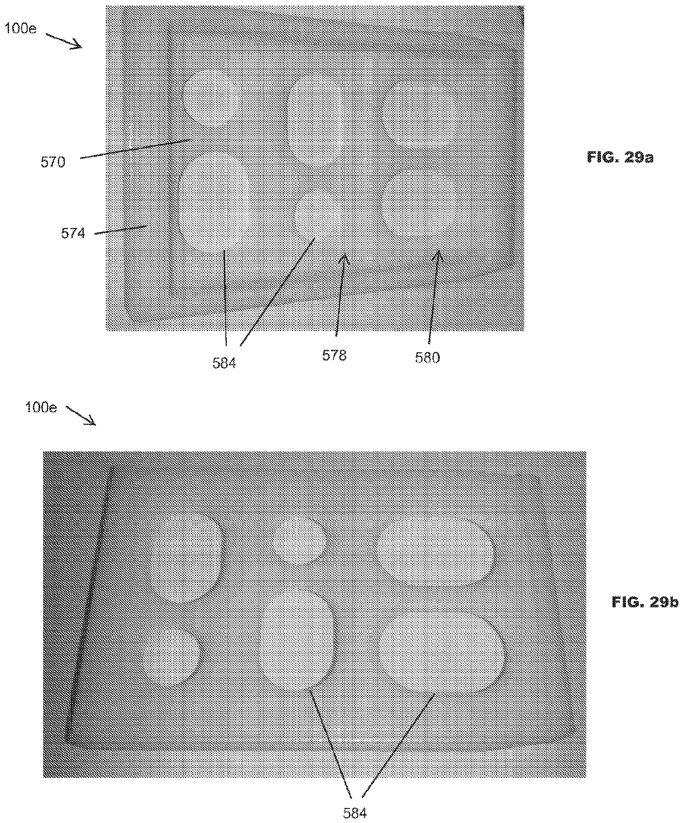

Figure 29 illustrates a sixth embodiment of the puck (referred to as puck 100e). The puck 100e includes a bottom wall 570 and a side wall 574 extending around the bottom wall 570. The side wall 574 can include varying thicknesses. As illustrated the two end walls (the shorter walls) have a greater thickness than the front and back walls (the longer walls). As illustrated, the side wall is angled at an end of the puck 100e. The bottom wall 570 includes a first portion 578 having a first thickness and a second portion 580 having a second thickness. As illustrated, the second portion 580 has a greater thickness than the first portion 578, however the first portion 578 in other constructions can have a greater thickness. The bottom wall 570 includes a plurality of openings 584. The blister pack 20 is coupled to the puck 100e with the compartments aligned with the openings 584 before inserting the puck 100e into the box 150.

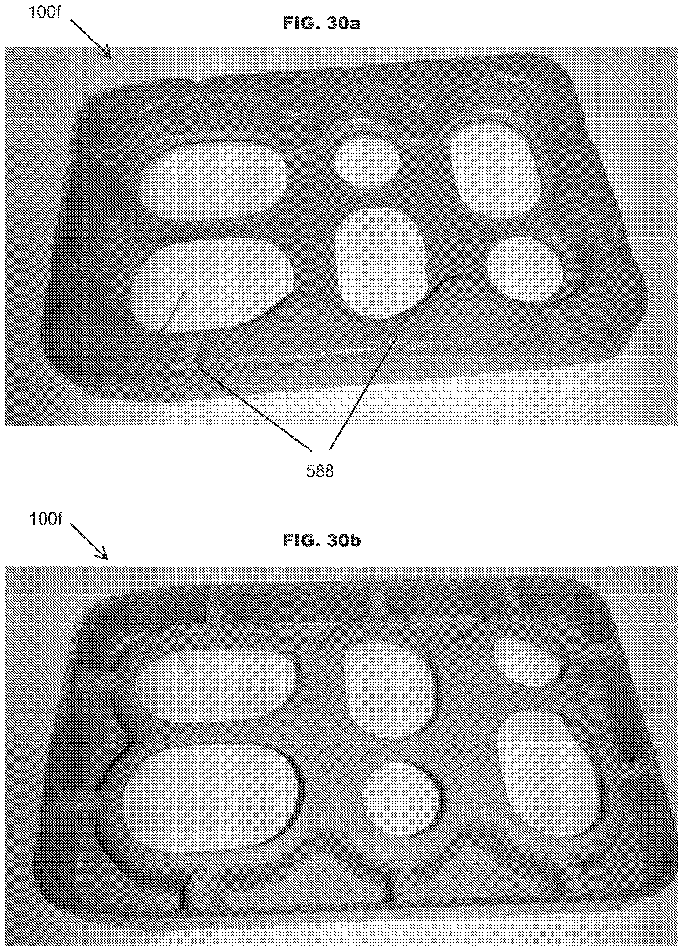

Figure 30 illustrates a seventh embodiment of the puck (referred to as puck 100f). The puck 100f is similar to the puck 100 described above. The puck 100fincludes a plurality of recesses 588 formed at various locations around a perimeter of the puck 100f.

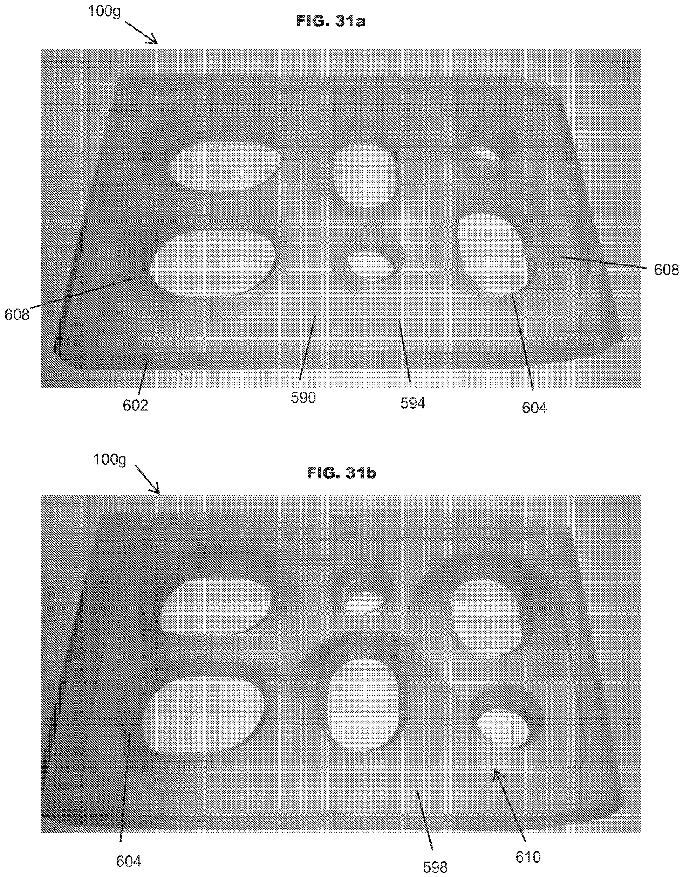

Figure 31 illustrates an eighth embodiment of the puck (referred to as puck 100g). The puck 100g includes a base 590 having a top surface 594 and a bottom surface 598 thereby defining a thickness therebetween. The base 590 includes a sidewall 602 extending between the top surface 594 and the bottom surface 598 and defining a perimeter. The side wall 602 may be angled at an end of the base 590. The base 590 includes a plurality of openings 604. The top surface 594 includes an area 608 around some of the openings 604 that is scalloped where a portion of the top surface 594 is gradually removed with less material being removed as the area transitions from the opening 604 and moving outwardly. The bottom surface 598 includes a recessed area 610 around all of the openings 604. The blister pack 20 is coupled to the puck 100g with the compartments aligned with the openings 604 before inserting the puck 100g into the box 150.

The pucks 100, 100a-g of Figs. 12-18 and 27-31 may also include ribbed surfaces as described above. Additionally, the ribbed surfaces may be included on additional or alternative surfaces and sides of the pucks 100, 100a-g. Further, although only illustrated in puck 100b, there may be a recess or other indicia 131b (e.g., orientation arrow) that indicates an orientation for which the puck 100b should be loaded when assembling the medicine container 10.

The pucks 100, 100a-g illustrated and described herein are merely exemplary. Pucks having additional configurations and features are within the scope and spirit of the invention. Therefore, it should be understood that the configuration of the plurality of openings may be adapted to any unique configuration of blister pack. Additionally, body portion, walls, and recess may have any suitable shape or size or dimension. Furthermore, the illustrated pucks may be formed from a composite material including paper pulp and bamboo fiber. The pulp/fiber combination is advantageous because it is environmentally safe and recyclable. However, other materials may be used to form the puck.

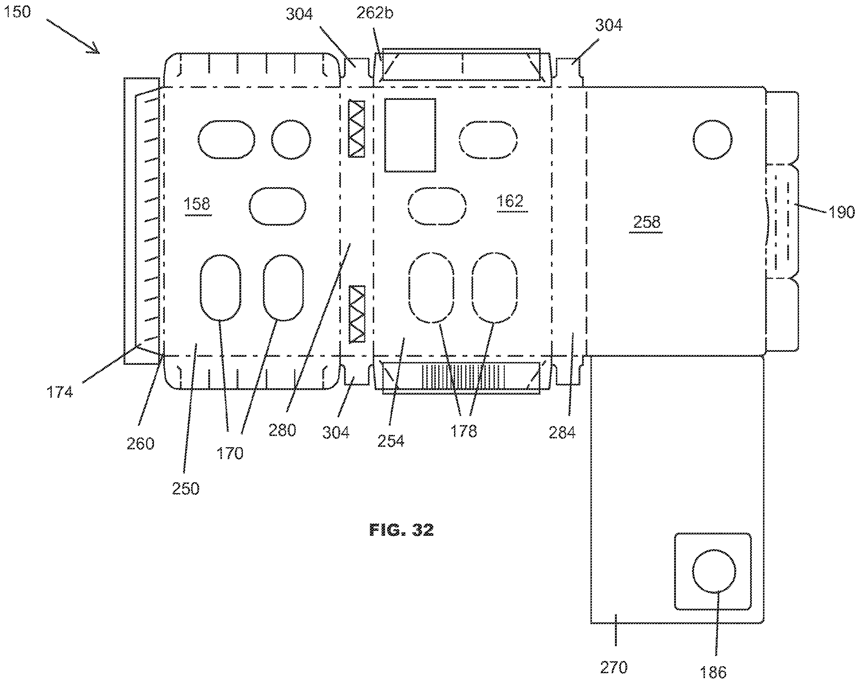

As noted above with respect to Figs. 1 and 2, the medicine container assembly 10 includes the box 150. With reference to Fig. 32, the box 150 is constructed from a substrate such as, fiberboard, cardboard or the like. The substrate is processed and cut into a box blank as illustrated in Fig. 32. The box blank is manipulated and folded where noted to form the box 150.

With additional reference to Figs. 1 and 3-4, the box 150 includes a plurality of walls that together define a cavity 154 therein. Specifically, the box 150 includes a first wall 158 spaced apart from and opposite a second wall 162. The first and second walls 158, 162 are spaced apart by intermediate walls 166. The first wall 158 includes a first side, which faces the cavity 154, and a second side, which faces an exterior of the box 150. The first wall 158 includes a plurality of openings 170 extending between the first and second sides and a protrusion 174 (Fig. 32) extending from the second side. The second wall 162 includes a first side, which faces the cavity 154, and a second side, which faces an exterior of the box 150. The second wall 158 includes a plurality of perforations 178.

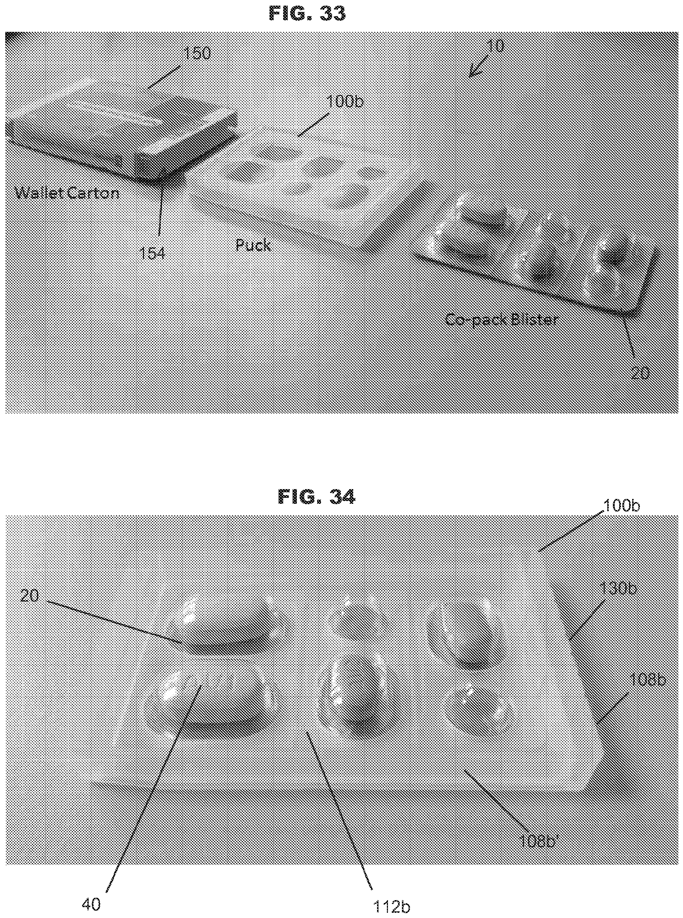

Figs. 33-37 illustrate a method of assembling the medication container assembly 10. In particular, the blister pack 20 and one of the pucks 100, 100a-g are configured to be received and secured within the box 150. The cavity 154 receives and secures the puck 100, 100a-g and blister pack 20 therein.

The following description is specific to pucks 100, 100a, 100b, however concepts are similar for pucks 100c-g where similar parts/components are noted but may have different numerals.

The blister pack 20 is coupled to the puck 100, 100a, 100b such that each of the plurality of compartments 40 is aligned with and protrudes through the corresponding plurality of openings 116 into the recess 112 of the puck 100. Glue may be applied to the blister pack to adhere the blister pack to the body 104, 104a, 104b of the puck 100, 100a, 100b. With the puck 100b, glue or other bonding material(s) is applied to the ribbed surfaces 130b at the ends of the walls 108b' to secure the puck 100b to the corresponding side walls of the box 150.

When secured within the cavity 154 of the box 150, the plurality of compartments 40 and plurality of openings 116, 116a, 116b in the puck 100, 100a, 100b are aligned with the plurality of openings 170 in the first wall 158 and plurality of perforations 178 in the second wall 162. As such, the medication 42 within the cavity 154 is viewable through the plurality of openings 170 in the first wall 158. Within the cavity 154, a gap (not shown) is created between the compartments 40 and the first wall 158 such that the compartments 40 are recessed relative to the first wall 158. Furthermore, the support knobs or ribs 50 of the blister pack 20 are not aligned with corresponding openings or perforations in the first and second walls. As such, the support knobs and ribs 50 maintain the gap or distance as medications 42 are expelled from the compartments 40 and the once medicine-filled compartments 40 are no longer able to retain their shape. A force applied through the plurality of openings 170 in the first wall to one or more of the compartments 40 causes the medication 42 to puncture the seal 54 in the blister pack 20 and severs the perforations 178 from the second wall 162. As such, the medication contained within one or more of the compartments 40 is expelled through the respective opening 116 in the puck 100 thereby creating holes in the second wall 162 of the box (Fig. 36a-b). Instructions for use 300 and medication information 304 may be included on an instruction card 308 included in the packaging (Fig. 37a-b).

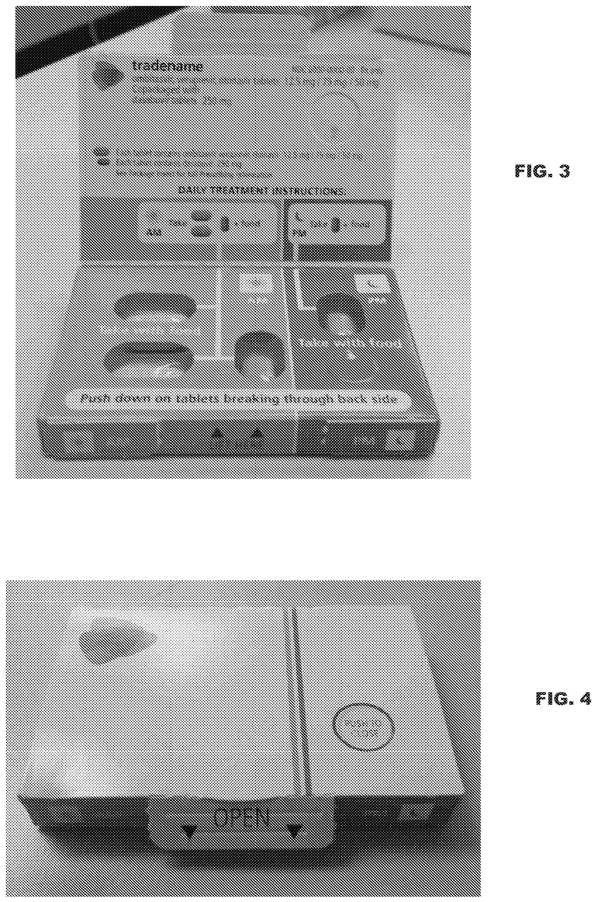

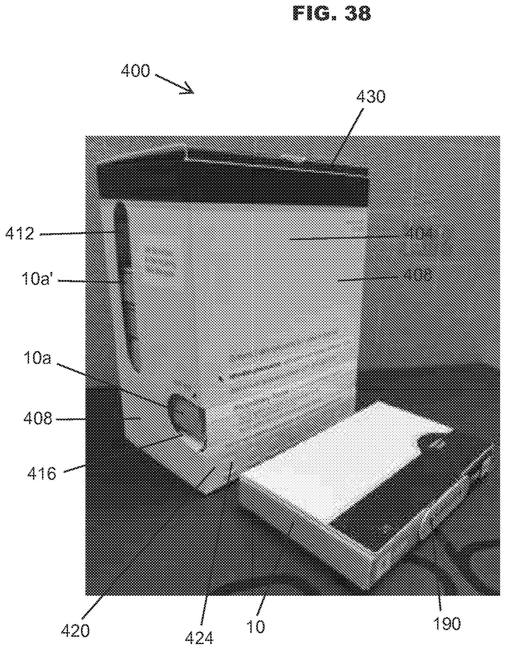

A third wall or overlay 182 is hingedly coupled to the first wall 158 and/or one of the intermediate walls 166. The third wall 182 includes a first side, which includes medication information, and a second side. The first side of the third wall 182 includes an opening or recessed portion 186 that includes an adhesive configured to couple or removably adhered to the first wall 158. The third wall 182 includes a securement tab or seal 190 (Figs. 4, 38). In a first closed position (Figs. 4, 38), the securement tab 190 is secured to one of the intermediate walls 166 such that the cavity 154, and therefore the medication 42 contained within the blister pack 20 is inaccessible. In a second, open position, the securement tab 190 is released from the intermediate wall 166 thereby allowing the third wall 182 to pivot relative to the first wall 158. Once the securement tab 190 has been released, the cavity 154, and therefore the medication contained within the blister pack 20 is accessible. After the securement tab 190 has been released and medication 42 is dispensed, the opening 186 in the third wall 182, which includes an adhesive, may be removably adhered to the first side 158 to temporarily prevent access to the cavity 154 and medication 42 therein.

The box 150 may also include printed portions that provide instructions for administration of the medication contained therein. For example, in the embodiments illustrated and described herein, the box 150 may include regions or sections 194, 194' that correspond to regions in the blister pack 20. As such, a first region 194 of the box 150 may correspond to a first region (i.e., the first and second regions 60, 60' in Figs. 5 and 6) while a second region 194' of the box 150 may correspond to a second region (i.e., the third region 60" in Figs. 5 and 6) of the blister pack 20. The first region 194 of the box 150 is printed with corresponding instructions related to the medication in the first region. For example, the first region 194 includes instructions on when to take the medication and under what conditions the medication should be administered. Similarly, the second region 194' of the box 150 is printed with corresponding instructions related to the medication in the second region. For example, the second region 194' includes instructions on when to take the medication and under what conditions the medication should be administered. The instructions may also include a color code to more clearly delineate how the medication contained with the container is to be administered. For example, the first region 194 of the box 150 includes a first color (i.e., associated with morning or day time) while the second region 194' of the box 150 includes a second color (i.e., associated with evening or night time).

The medicine container assembly 10 includes several features that prevent a child from accessing the medication contained therein. First, at least the first wall 158 preferably includes a film overlay or laminate, which makes it more difficult for a child to tear or rip the container 10 at or near the openings 170. Additionally, the walls include a glue or other suitable adhesive that effectively couples the walls together, thus preventing a child from easily accessing the interior contents of the container 10. Further, the securement tab 190 is preferably a tamper-evident indicator tab. That is, releasing the securement tab 190 from the intermediate wall changes 166 the color (i.e., by removing a layer of paint or material or the like) of first and second indicator tabs 200. The color of the indicator tabs 200, which is different from the color of the surrounding wall 166, indicates to the user that the securement tab 190 has been initially removed. The securement tab 190 and indicator tabs 200 are advantageous because they alert the user that someone else has already tried to access the medication secured within the container 10. This feature is particularly advantageous to alert parents that a child may have had access to the medication. Another child-resistant feature of the container 10 is that once the third wall 182 has been released by the securement tab 190 and the cavity 154 and medication are accessible, the gap between the first wall 158 and plurality of compartments 40 increase the distance and force necessary to break the seal 54 in the blister pack 20 and sever the perforations 178. The force necessary to dispense the medication is further increased by the puck 100, which introduces added stiffness and rigidity to the assembled container 10. The medication container 10 is thus constructed to prevent children from accessing the medication secured therein and to meet regulatory standards for child-resistant packaging.

The medicine container 10 is assembled using one or more of the following steps. First, the box 150 is prepared and folded. As illustrated in Fig. 32, prior to being assembled, the box blank includes a first side and a second side. The box blank further includes a first section 250, a second section 254 and a third section 258, which are arranged linearly. The first section 250 includes first, second, and third projections 260a-260c, the second section 254 includes fourth and fifth projections 262a, 262b, and the third section 258 includes the securement tab 190 and a label portion 270 coupled thereto. A first intermediate section 280 is disposed between the first and second sections 250, 254 and a second intermediate section 284 is disposed between the second and third sections 254, 258. The first intermediate section 280 includes the indicator tabs 200. The first section 250 includes the plurality of openings 170 extending between the first and second sides, indicated by the solid lines, while the second section 254 includes the plurality of perforations 178, indicated by the dashed lines.

The box blank is assembled by bending the first section 250 along a point of connection between the first section 250 and the first intermediate section 280. Similarly, the second section 254 is bent along a point of connection between the first intermediate section 280 and the second section 254. In doing so, the first section 250, which forms the first wall 158, is spaced apart from the second section 254, which forms the second wall 162, by the first intermediate section 280, which is one of the intermediate walls 166. The third projection 260c extending from the first section 250 is then secured (i.e., by adhesive or the like) to the second intermediate section 284. The first and second intermediate sections 280, 284 are therefore two of the intermediate walls 166 between the first and second walls 158, 162 of the box blank. When coupled by the intermediate walls 166, the first and second walls 158, 162 are parallel to one another such that the plurality of openings 170 in the first wall 158 are aligned with the plurality of perforations 178 in the second wall 162. The plurality of openings 170 are also complementary to the plurality of perforations 178. The first and second walls 158, 162 also define a portion of the cavity 154 when coupled by two of the four intermediate walls 166.

Prior to being inserted in the cavity 154, the blister pack 20 is applied to the puck such that each of the plurality of compartments of the blister pack 20 is aligned with the plurality of openings 116 in the puck 100. As discussed above, each of the plurality of openings 116 is configured to be complementary to one of the plurality of compartments. Then, together, the blister pack 20 and puck 100 are inserted into the box 150 between the first and second walls 158, 162. The plurality of openings 170 extending through the first wall 158 of the box 150 are aligned with the plurality of perforations 178 in the second wall 162. Each of the plurality of openings 116 of the puck 100 align with the plurality of openings 170 in the first wall 158 and plurality of perforations 178 in the second wall 162. Furthermore, like the openings 116 in the puck 100, each of the aligned plurality of openings 170 in the first wall 158 and plurality of perforations 176 in the second wall 162 are complementary to and aligned with one of the plurality of compartments 40. As such, the medication 42 within the cavity 154 is viewable through the plurality of openings 170 in the first wall 158.

The medicine container assembly 10 is assembled by securing the blister pack 20 and puck 100 within the cavity 154 of the box 150 such that the medication in each of the plurality of compartments 40 is viewable through the plurality of openings 170 in the first wall 158. Accordingly, auxiliary tabs 304 extending from each of the first and second intermediate sections 280, 284 and the first and second projections 260a, 262a, 260b, 260b extending from each of the first and second sections 250, 254 (e.g., first and second walls 158, 162) are folded. As such, the first projections 260, 262a overlap and are secured to the second projections 260b, 262b, which overlap and are secured to the auxiliary projections 304. The walls of the box blank are secured by glue or another suitable adhesive.

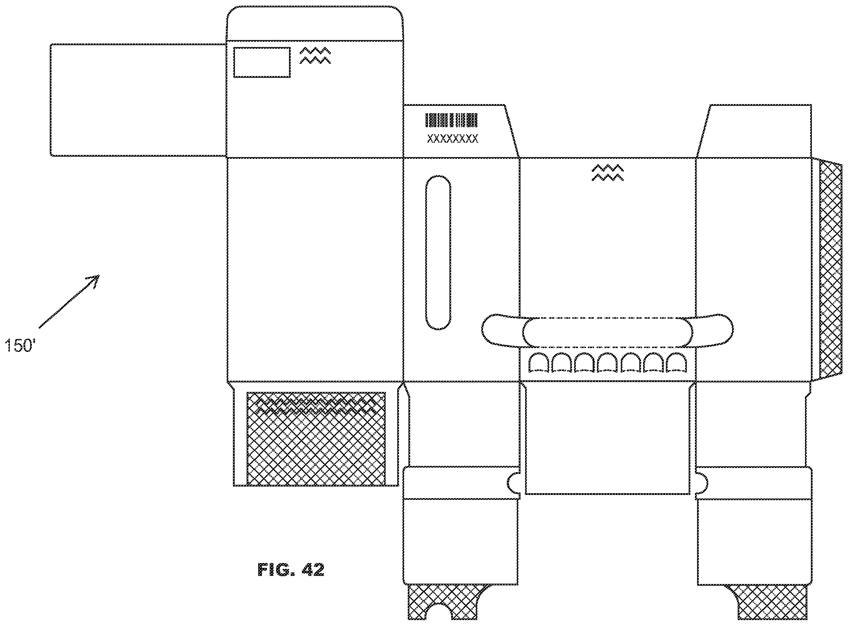

The medication information, which might include instructions, dosing information, or information about the medication, is coupled (e.g., by an adhesive) to the first side of the third wall 182. The third wall 182 is then such that the third wall 182 overlays the first wall 158. The securement tab 190 is then coupled to one of the intermediate walls 166 to complete the assembly of the container 10. In the embodiments illustrated in Figs. 1-37, the blister packs 20, 20a, 20b, the pucks 100, 100a-g, and the box 150 are configured to receive and secure a daily dose of medication. However, in additional or alternative embodiments, the blister packs, the pucks, and the box may be configured to receive and secure hourly, weekly, or monthly medication doses. For example, the box 150' of Fig. 42, when assembled, is configured to receive and secure a blister pack and puck that receive and secure a weekly dose of medication. As illustrated in Fig. 42, the concepts discussed herein are similar except that the aperture/perforation configuration accommodates a different number and size of medication/pill.

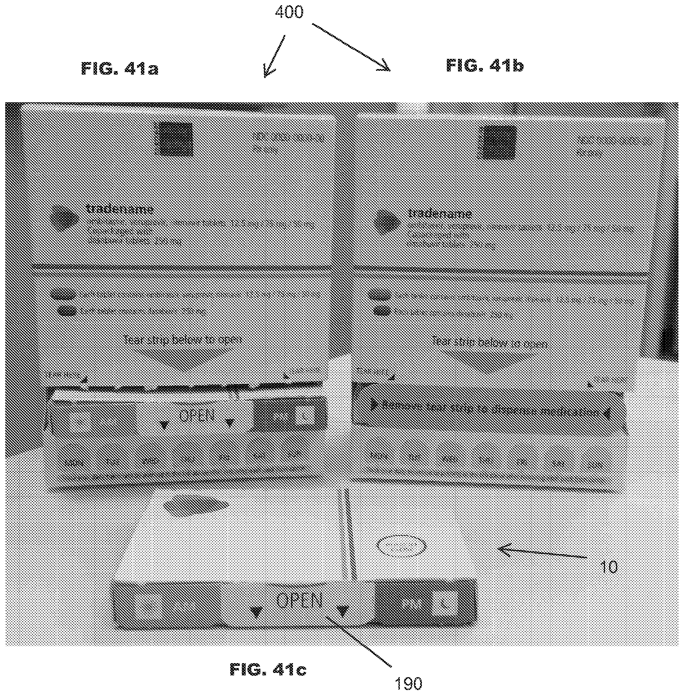

The medicine container assembly 10 may be used to dispense appropriate doses of medication secured therein according to one or more of the following steps. First, the securement tab 190 is released such that the third wall 182 moves from a first, closed position (Figs. 4, 38, 41) in which the third wall 182 overlays the first wall 158 to a second, open position (Figs. 1, 3) in which the first wall 158 and the cavity 154 of the box 150 are accessible. Upon the release of the securement tab 190, the indicator tabs 166 turn to a color that is different than the color of the surrounding wall. In the open position, instructions for appropriate administration of the medication are clearly visible. One or more doses of medication contained in the respective one or more of the plurality of compartments 40 of the blister pack 20 is expelled by applying a substantial force through the corresponding complementary opening 170 in the first wall 158 to a surface of the compartment 40. The force causes the medication secured within the compartment 40 to puncture the seal 54 in the second side 26 of the blister pack 20 thereby moving the medication or pill through the opening 48 of the compartment 40. The force continues to move the medication through the corresponding complementary opening 116 in the puck 100 such that the force of the medication against the corresponding complementary perforation 178 causes the perforation 178 to sever from the surrounding second wall 162. Therefore, a hole in the second wall 162 is created as the medication is expelled from the container 10. Once the medication has been dispensed, the third wall 182 may be moved from the second, open position to a third resealed position (not shown). Once again, access to the cavity 154, and therefore the medication contained therein, is inaccessible. Therefore, the plurality of openings 170 in both the first wall 158 of the box 150 and the puck 100 and the plurality of perforations 178 in the second wall 162 of the box 150 are all complementary and configured to be aligned.

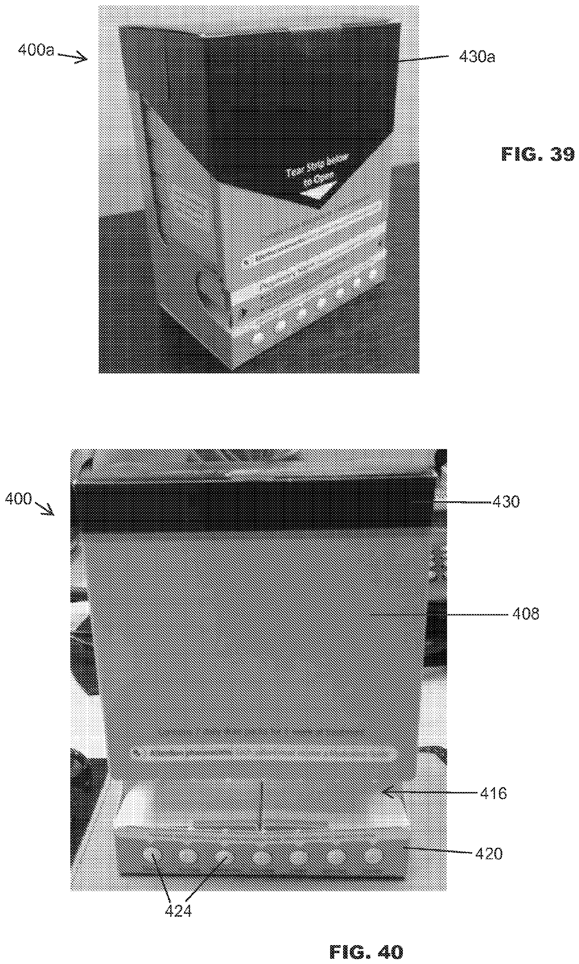

As illustrated in Figs. 38-39, 41 one or more of the child-resistant medicine container assemblies 10 may be housed in and dispensed from a gravity-feed dispenser 400. The gravity-feed dispenser 400 has a first side, second side, front side, back side, a top side and a bottom side. The dispenser 400 further includes a substantially rectangular body 404 defined by six walls 408, which enclose a substantially rectangular cavity 412. An aperture or opening 416 sized and shaped to receive one child-resistant medication container 10 extends along a bottom of a front wall of the dispenser 400 and between a first side wall and a second, opposite side wall of the container 10. The aperture 416 is spaced apart from a bottom wall by a gap or platform 420, which includes a plurality of protrusions 424. A non-removable lid 430 is coupled to the top side of the dispenser 400. Once the one or more containers 10 are stacked within the cavity 412, the lid 430 is irremovably sealed to the body 404 of the dispenser 400 such that the containers 10 cannot be removed through the top of the dispenser 400. A bottom container 10a is disposed within the aperture 416, and the other containers 10a' are stacked on top of the bottom container 10a within the cavity 412. The bottom container 10a may be removed from the dispenser 400 by grasping the container 10a through the openings created by the aperture 416 in the first and second side walls.

Once the bottom container 10a is removed, an adjacent container 10a', and therefore all of the other containers 10a'move downward. The adjacent container 10a' becomes the bottom container 10a and is disposed within the aperture 416 and is ready to be removed. Once a container 10a is removed, one of the protrusions 424 may be depressed to indicate that container 10a has been removed. For example, the dispenser in the illustrated embodiment is sized and shaped to house seven containers 10 (e.g., a one week's worth of the medication) and the gap includes seven protrusions, one for each day of the week. On a first day of the week (e.g., Monday), the first, bottom container 10 is removed and the first protrusion is depressed. Therefore, the user is alerted to the fact that there should be six containers remaining in the dispenser, which is evident by the through hole in at least one of the first and second side walls or the rear wall and by the six remaining un-depressed protrusions. The dispenser is considered a child-resistant feature because the intended user can modify the amount of containers that are housed in the dispenser compared to the amount of containers that should be in the dispenser.

Thus, the invention provides, among other things, a child-resistant medication container. The invention additionally provides a method of assembling the child-resistant medication container. The invention further provides a method of dispensing medication from a child-resistant medication container. The invention also provides a dispenser for dispensing a plurality of child-resistant medication containers.

Various features and advantages of the invention are set forth in the following claims.

## Claims

1. A child-resistant medication container assembly (10) comprising:
a blister pack (20) including a plurality of compartments (40), each of the plurality of compartments (40) configured to support at least one medication (42);
a puck (100) including a recess (112) having a plurality of openings (116) with each opening (116) in the puck (100) corresponding to one of the plurality of compartments (40) of the blister pack (20); and
a box (150) including a first wall (158) opposite a second wall (162), a plurality of openings (170) extending through the first wall (158), each of the openings (170) in the first wall (158) being aligned with corresponding perforations (178) in the second wall (162), each of the openings (170) in the first wall (158) being aligned with one of the openings (116) in the puck (100) and a corresponding compartment (40) of the blister pack (20).

2. The child-resistant medication container (10) of claim 1 wherein each of the plurality of compartments (40) is spaced apart from the complementary opening (170) in the box (150).

3. The child-resistant medication container (10) of claim 1 wherein the box (150) includes a series of instructions for administering the medication (42) secured within the plurality of compartments (40) of the blister pack (20).

4. The child resistant medication container (10) of claim 1 wherein the blister pack (20) further includes a first region (60) and a second region (60'), each of the first and second regions including at least one of the plurality of compartments (40).

5. The child resistant medication container (10) of claim 4 wherein the box (150) further includes a first region (194) and a second region (194'), each of the first and second regions including at least one of the plurality of openings (170).

6. The child resistant medication container (10) of claim 5 wherein the first region (60) of the blister pack (20) is aligned with the first region (194) of the box (150), and the second region (60') of the blister pack (150) is aligned with the second region (194') of the box (150).

7. The child resistant medication container (10) of claim 5 wherein the first region (194) of the box (150) includes a first set of instructions for administering the medication (42) secured in the at least one of the plurality of compartments (40) of the first region (194) and wherein the second region (194') of the box (150) includes a second set of instructions for administering the medication (42) secured in the at least one of the plurality of compartments (40) of the second region (194').

8. The child resistant medication container (10) of claim 1 wherein the box (150) is constructed from cardboard having a layer of tear-resistant film.

9. The child resistant medication container (10) of claim 1 wherein the puck (100) further includes a plurality of openings (116) extending through the recess (112), each of the plurality of openings (116) configured to be complementary to and in alignment with one of the plurality of compartments (40).

10. The child resistant medication container (10) of claim 1 wherein the puck (100) includes a height that is greater than a height of one of the compartments (40) of the blister pack (20).

11. The child resistant medication container (10) of claim 1 wherein the puck (100) is constructed from molded paper pulp and bamboo fiber.

12. The child resistant medication container (10) of claim 1 wherein the medication (42) secured in each of the plurality of compartments (40) is accessible by puncturing a seal (54) in the blister pack (20).

13. The child resistant medication container (10) of claim 1 wherein the box (150) is assembled and secured by glued-end construction.

14. The child resistant medication container (10) of claim 1 wherein the box (150) includes a third wall (182) hingedly coupled to the first wall (158), the third wall (182) overlaying the first wall (158) to prevent access to the plurality of openings (170) in the box (150).

15. A method of assembling a child-resistant medication container (10), the method comprising:
aligning a blister pack (20) including a plurality of compartments (40) with a puck (100) including a recess (112) and a plurality of openings (116), each of the plurality of openings (116) configured to be complementary to one of the plurality of compartments (40);
attaching the blister pack (20) to the puck (100);
inserting the blister pack (20) and the puck (100) into a box (150), the box including a first wall (158) opposite a second wall (162), a plurality of openings (170) extending through the first wall (158) and being aligned with a plurality of perforations (178) in the second wall (162), each of the aligned plurality of openings (170) and perforations (178) being complementary to one of the plurality of compartments (40); and
closing the box (150) to enclose the blister pack (20) and the puck (100).

16. The method of assembling a child-resistant medication container (10) of claim 15 wherein inserting the blister pack (20) and puck (100) into the box (150) includes maintaining a gap between the plurality of compartments (40) and the plurality of openings (170) in the first wall (158).

17. The method of assembling a child-resistant medication container (10) of claim 15 wherein securing the blister pack (20) and the puck (100) within the box (150) includes overlaying and securing a third wall (182) over the first wall (158).

18. The method of assembling a child-resistant medication container (10) of claim 15, further comprising printing on the box (150) a series of instructions for administering the medication (42) secured within the plurality of compartments (40).

19. The method of assembling a child-resistant medication container (10) of claim 15 further comprising:
providing the blister pack (20) with a first region (60) and a second region (60'), each of the first and second regions including at least one of the plurality of compartments (40);
providing the box (150) with a first region (194) and a second region (194'), each of the first and second regions including at least one of the plurality of openings (170);
aligning the first region (60) of the blister pack (20) with the first region (194) of the box (150);
aligning the second region (60') of the blister pack (20) with the second region (194') of the box (150);
printing on the first region (194) of the box (150) a first instruction for administering the medication (42) secured within the at least one of the plurality of compartments (40) of the first region (194); and
printing on the second region (194') of the box (150) a second instruction for administering the medication (42) secured within the at least one of the plurality of compartments (40) of the second region (194').

20. A method of dispensing medication (42) secured within a child-resistant medication container (10) to a user, the method comprising:
providing a container (10) including a box (150), a puck (100), and a blister pack (20), the puck (100) being secured to the box (150), and the blister pack (20) being secured to the puck (100);
applying a force to at least one compartment of a plurality of compartments (40) of the blister pack (20), each of the plurality of compartments (40) being aligned with a complementary one of a plurality of openings (170) in a first wall (158) of the box (150);
breaking a seal (54) of the at least one compartment (40) to move medication (42) contained within the at least one compartment (40);
expelling the medication (42) through an opening (1 16) in the recess (112) of the puck (100), the opening (116) being complementary to the at least one compartment (40); and
expelling the medication (42) through a perforation (178) in a second wall (162) of the box (150), the perforation (178) being complementary to the at least one compartment (40).

## Patentansprüche

1. Kindersichere Medikamentenbehälteranordnung (10), welche aufweist:
eine Blisterpackung (20), die eine Mehrzahl von Abteilen (40) enthält, wobei jedes der Mehrzahl von Abteilen (40) konfiguriert ist, um zumindest ein Medikament (42) zu tragen;
eine Schale (100), die eine Vertiefung (112) enthält, die eine Mehrzahl von Öffnungen (116) aufweist, wobei jede Öffnung (116) in der Schale (100) einem der Mehrzahl von Abteilen (40) der Blisterpackung (20) entspricht; und
eine Schachtel (150), der eine erste Wand (158) gegenüber einer zweiten Wand (162), eine Mehrzahl von Öffnungen (170), die sich durch die erste Wand (158) erstrecken, wobei jede der Öffnungen (170) in der ersten Wand (158) zu entsprechenden Perforationen (178) in der zweiten Wand (162) ausgerichtet ist, wobei jede der Öffnungen (170) in der ersten Wand (158) zu einer der Öffnungen (116) in der Schale (100) und einem entsprechenden Abteil (40) der Blisterpackung (20) ausgerichtet ist.

2. Der kindersichere Medikamentenbehälter (10) von Anspruch 1, wobei jedes der Mehrzahl von Abteilen (40) mit Abstand von der komplementären Öffnung (170) in der Schachtel (150) angeordnet ist.

3. Der kindersichere Medikamentenbehälter (10) von Anspruch 1, wobei die Schachtel (150) eine Serie von Anweisungen zum Verabreichen des Medikaments (42) enthält, das in der Mehrzahl von Abteilen (40) der Blisterpackung (20) gesichert ist.

4. Der kindersichere Medikamentenbehälter (10) von Anspruch 1, wobei die Blisterpackung (20) ferner einen ersten Bereich (60) und einen zweiten Bereich (60') enthält, wobei jeder der ersten und zweiten Bereiche zumindest eines der Mehrzahl von Abteilen (40) enthält.

5. Der kindersichere Medikamentenbehälter (10) von Anspruch 4, wobei die Schachtel (150) ferner einen ersten Bereich (194) und einen zweiten Bereich (194') enthält, wobei jeder der ersten und zweiten Bereiche zumindest eine der Öffnungen (170) enthält.

6. Der kindersichere Medikamentenbehälter (10) von Anspruch 5, wobei der erste Bereich (60) der Blisterpackung (20) zu dem ersten Bereich (194) der Schachtel (150) ausgerichtet ist, und der zweite Bereich (60') der Blisterpackung (150) zu dem zweiten Bereich (194') der Schachtel (150) ausgerichtet ist.

7. Der kindersichere Medikamentenbehälter (10) von Anspruch 5, wobei der erste Bereich (194) der Schachtel (150) einen ersten Satz von Anweisungen zum Verabreichen des Medikaments (42) enthält, das in dem zumindest einen der Mehrzahl von Abteilen (40) des ersten Bereichs (194) gesichert ist, und wobei der zweite Bereich (194') der Schachtel (150) einen zweiten Satz von Anweisungen zum Verabreichen des Medikaments (42) enthält, das dem zumindest einen der Mehrzahl von Abteilen (40) des zweiten Bereichs (194') gesichert ist.

8. Der kindersichere Medikamentenbehälter (10) von Anspruch 1, wobei die Schachtel (150) aus Karton mit einer Schicht aus reißfester Folie aufgebaut ist.

9. Der kindersichere Medikamentenbehälter (10) von Anspruch 1, wobei die Schale (100) ferner eine Mehrzahl von Öffnungen (116) enthält, die sich durch die Vertiefung (112) erstrecken, wobei jede der Mehrzahl von Öffnungen (116) so konfiguriert ist, dass sie zu einem der Mehrzahl von Abteilen (40) komplementär und hierzu ausgerichtet ist.

10. Der kindersichere Medikamentenbehälter (10) von Anspruch 1, wobei die Schale (100) eine Höhe enthält, die größer ist als eine Höhe von einem der Abteile (40) der Blisterpackung (20).

11. Der kindersichere Medikamentenbehälter (10) von Anspruch 1, wobei die Schale (100) aus geformter Papierpulpe und Bambusfaser aufgebaut ist.

12. Der kindersichere Medikamentenbehälter (10) von Anspruch 1, wobei das Medikament (42), das in jedem der Mehrzahl von Abteilen (40) gesichert ist, durch Punktieren einer Versiegelung (54) in der Blisterpackung (20) zugänglich ist.

13. Der kindersichere Medikamentenbehälter (10) von Anspruch 1, wobei die Schachtel (150) durch eine endverklebte Konstruktion zusammengebaut und gesichert ist.

14. Der kindersichere Medikamentenbehälter (10) von Anspruch 1, wobei die Schachtel (150) eine dritte Wand (182) enthält, die mit der ersten Wand (158) gelenkig verbunden ist, wobei die dritte Wand (182) auf der ersten Wand (158) aufliegt, um einen Zugang zu der Mehrzahl von Öffnungen (170) in der Schachtel (150) zu verhindern.

15. Verfahren des Zusammenbaus eines kindersicheren Medikamentenbehälters (10), wobei das Verfahren aufweist:
Ausrichten einer Blisterpackung (20), die eine Mehrzahl von Abteilen (40) enthält, zu einer Schale (100), die eine Vertiefung (112) und eine Mehrzahl von Öffnungen (116) enthält, wobei jede der Mehrzahl von Öffnungen (116) so konfiguriert ist, dass sie zu einem der Mehrzahl von Abteilen komplementär ist;
Anbringen der Blisterpackung (20) an der Schale (100);
Einsetzen der Blisterpackung (20) und der Schale (100) in eine Schachtel (150), wobei die Schachtel eine erste Wand (158) gegenüber einer zweiten Wand (162), eine Mehrzahl von Öffnungen (170), die sich durch die erste Wand (158) erstrecken und zu einer Mehrzahl von Perforationen (178) in der zweiten Wand (162) ausgerichtet sind, enthält, wobei jede der ausgerichteten Mehrzahl von Öffnungen (170) und Perforationen (178) zu einem der Mehrzahl von Abteilen (40) komplementär ist, und
Verschließen der Schachtel (150), um die Blisterpackung (20) und die Schale (100) einzuschließen.

16. Das Verfahren des Zusammenbaus eines kindersicheren Medikamentenbehälters (10) von Anspruch 15, wobei das Einsetzen der Blisterpackung (20) und der Schale (100) in die Schachtel (150) enthält, eine Lücke zwischen der Mehrzahl vom Abteilen (40) und der Mehrzahl von Öffnungen (170) in der ersten Wand (158) einzuhalten.

17. Das Verfahren des Zusammenbaus eines kindersicheren Medikamentenbehälters (10) von Anspruch 15, wobei das Sichern der Blisterpackung (20) und der Schale (100) in der Schachtel (150) enthält, eine dritte Wand (182) auf die erste Wand (158) aufzulegen und daran zu sichern.

18. Das Verfahren des Zusammenbaus eines kindersicheren Medikamentenbehälters (10) von Anspruch 15, das ferner aufweist, auf die Schachtel (150) eine Serie von Anweisungen zum Verabreichen des Medikaments (42) aufzudrucken, das in der Mehrzahl von Abteilen (40) gesichert ist.

19. Das Verfahren des Zusammenbaus eines kindersicheren Medikamentenbehälters (10) von Anspruch 15, das ferner aufweist:
Versehen der Blisterpackung (20) mit einem ersten Bereich (60) und einem zweiten Bereich (60'), wobei jeder der ersten und zweiten Bereiche zumindest eines der Mehrzahl von Abteilen (40) enthält;
Versehen der Schachtel (150) mit einem ersten Bereich (194) und einem zweiten Bereich (194'), wobei jeder der ersten und zweiten Bereiche zumindest eine der Mehrzahl von Öffnungen (170) enthält;
Ausrichten des ersten Bereichs (60) der Blisterpackung (20) zu dem ersten Bereich (194) der Schachtel (150);
Ausrichten des zweiten Bereichs (60') der Blisterpackung (20) zu dem zweiten Bereich (194') der Schachtel (150);
Aufdrucken, auf den ersten Bereich (194) der Schachtel (150), einer ersten Anweisung zum Verabreichen des Medikaments (42), das in zumindest einem der Mehrzahl von Abteilen (40) des ersten Bereichs (194) gesichert ist; und
Aufdrucken, auf den zweiten Bereich (194') der Schachtel (150), einer zweiten Anweisung zum Verabreichen des Medikaments (42), das in zumindest einem der Mehrzahl von Abteilen (40) des zweiten Bereichs (194') gesichert ist.

20. Verfahren zum Verabreichen eines in einem kindersicheren Medikamentenbehälter (10) gesicherten Medikaments (42) an einen Benutzer, wobei das Verfahren aufweist:
Bereitstellen eines Behälters (10), der eine Schachtel (150), eine Schale (100) und eine Blisterpackung (20) enthält, wobei die Schale (100) an der Schachtel (150) gesichert ist, und die Blisterpackung (20) an der Schale (100) gesichert ist;
Anlegen einer Kraft an zumindest ein Abteil einer Mehrzahl von Abteilen (40) der Blisterpackung (20), wobei jedes der Mehrzahl von Abteilen (40) zu einer Komplementären einer Mehrzahl von Öffnungen (170) in einer ersten Wand (158) der Schachtel (150) ausgerichtet ist;
Brechen einer Versiegelung (54) des zumindest einen Abteils (40), um das in dem zumindest einen Abteil (40) enthaltene Medikament (42) zu bewegen;
Auswerfen des Medikaments (42) durch die Öffnung (116) in der Vertiefung (112) der Schale (100), wobei die Öffnung (116) zu dem zumindest einen Abteil (40) komplementär ist; und
Auswerfen des Medikaments (42) durch eine Perforation (178) in einer zweiten Wand (172) der Schachtel (150), wobei die Perforation (178) zu dem zumindest einen Abteil (40) komplementär ist.

## Revendications

1. Ensemble récipient pour médicaments à l'épreuve des enfants (10) comprenant :
un blister (20) comprenant une pluralité de compartiments (40), chacun de la pluralité de compartiments (40) configuré pour supporter au moins un médicament (42) ;
un curseur (100) comprenant une cavité (112) ayant une pluralité d'ouvertures (116), chaque ouverture (116) dans le curseur (100) correspondant à l'un de la pluralité de compartiments (40) du blister (20) ; et
une boîte (150) comprenant une première paroi (158) opposée à une seconde paroi (162), une pluralité d'ouvertures (170) s'étendant à travers la première paroi (158), chacune des ouvertures (170) dans la première paroi (158) étant alignée avec les perforations correspondantes (178) dans la seconde paroi (162), chacune des ouvertures (170) dans la première paroi (158) étant alignée avec l'une des ouvertures (116) dans le curseur (100) et un compartiment correspondant (40) du blister (20).

2. Récipient pour médicaments à l'épreuve des enfants (10) selon la revendication 1 dans lequel chacun de la pluralité de compartiments (40) est espacé de l'ouverture complémentaire (170) dans la boîte (150).

3. Récipient pour médicaments à l'épreuve des enfants (10) selon la revendication 1 dans lequel la boîte (150) comprend une série d'instructions pour l'administration du médicament (42) fixé à l'intérieur de la pluralité de compartiments (40) du blister (20).

4. Récipient pour médicaments à l'épreuve des enfants (10) selon la revendication 1 dans lequel le blister (20) comprend en outre une première région (60) et une seconde région (60'), chacune des première et seconde régions comprenant au moins l'un de la pluralité de compartiments (40).

5. Récipient pour médicaments à l'épreuve des enfants (10) selon la revendication 4 dans lequel la boîte (150) comprend en outre une première région (194) et une seconde région (194'), chacune des première et seconde régions comprenant au moins l'une de la pluralité d'ouvertures (170).

6. Récipient pour médicaments à l'épreuve des enfants (10) selon la revendication 5 dans lequel la première région (60) du blister (20) est alignée avec la première région (194) de la boîte (150), et la seconde région (60') du blister (150) est alignée avec la seconde région (194') de la boîte (150).

7. Récipient pour médicaments à l'épreuve des enfants (10) selon la revendication 5 dans lequel la première région (194) de la boîte (150) comprend un premier jeu d'instructions pour l'administration du médicament (42) fixé dans l'au moins un de la pluralité de compartiments (40) de la première région (194) et dans lequel la seconde région (194') de la boîte (150) comprend un second jeu d'instructions pour l'administration du médicament (42) fixé dans l'au moins un de la pluralité de compartiments (40) de la seconde région (194').

8. Récipient pour médicaments à l'épreuve des enfants (10) selon la revendication 1 dans lequel la boîte (150) est construite en carton ayant une couche de film résistant à la déchirure.

9. Récipient pour médicaments à l'épreuve des enfants (10) selon la revendication 1 dans lequel le curseur (100) comprend en outre une pluralité d'ouvertures (116) s'étendant à travers la cavité (112), chacune de la pluralité d'ouvertures (116) configurée pour être complémentaire de et alignée avec l'un de la pluralité de compartiments (40).

10. Récipient pour médicaments à l'épreuve des enfants (10) selon la revendication 1 dans lequel le curseur (100) comprend une hauteur qui est supérieure à une hauteur de l'un des compartiments (40) du blister (20).

11. Récipient pour médicaments à l'épreuve des enfants (10) selon la revendication 1 dans lequel le curseur (100) est construit en pâte à papier et fibre de bambou moulées.

12. Récipient pour médicaments à l'épreuve des enfants (10) selon la revendication 1 dans lequel le médicament (42) fixé dans chacun de la pluralité de compartiments (40) est accessible par perforation d'un opercule (54) dans le blister (20).

13. Récipient pour médicaments à l'épreuve des enfants (10) selon la revendication 1 dans lequel la boîte (150) est assemblée et fixée par une construction à extrémités collées.

14. Récipient pour médicaments à l'épreuve des enfants (10) selon la revendication 1 dans lequel la boîte (150) comprend une troisième paroi (182) couplée par charnière à la première paroi (158), la troisième paroi (182) recouvrant la première paroi (158) pour empêcher l'accès à la pluralité d'ouvertures (170) dans la boîte (150).

15. Procédé d'assemblage d'un récipient pour médicaments à l'épreuve des enfants (10), le procédé comprenant :
l'alignement d'un blister (20) comprenant une pluralité de compartiments (40) avec un curseur (100) comprenant une cavité (112) et une pluralité d'ouvertures (116), chacune de la pluralité d'ouvertures (116) configurée pour être complémentaire de l'un de la pluralité de compartiments (40) ;
la fixation du blister (20) au curseur (100) ;
l'insertion du blister (20) et du curseur (100) dans une boîte (150), la boîte comprenant une première paroi (158) opposée à une seconde paroi (162), une pluralité d'ouvertures (170) s'étendant à travers la première paroi (158) et étant alignées avec une pluralité de perforations (178) dans la seconde paroi (162), chacune de la pluralité d'ouvertures (170) et des perforations (178) alignées étant complémentaires de l'un de la pluralité de compartiments (40) ; et
la fermeture de la boîte (150) pour enfermer le blister (20) et le curseur (100).

16. Procédé d'assemblage d'un récipient pour médicaments à l'épreuve des enfants (10) selon la revendication 15 dans lequel l'insertion du blister (20) et du curseur (100) dans la boîte (150) comprend le maintien d'un espace entre la pluralité de compartiments (40) et la pluralité d'ouvertures (170) dans la première paroi (158).

17. Procédé d'assemblage d'un récipient pour médicaments à l'épreuve des enfants (10) selon la revendication 15 dans lequel la fixation du blister (20) et du curseur (100) à l'intérieur de la boîte (150) comprend le recouvrement et la fixation d'une troisième paroi (182) sur la première paroi (158).

18. Procédé d'assemblage d'un récipient pour médicaments à l'épreuve des enfants (10) selon la revendication 15, comprenant en outre l'impression sur la boîte (150) d'une série d'instructions pour l'administration du médicament (42) fixé à l'intérieur de la pluralité de compartiments (40).

19. Procédé d'assemblage d'un récipient pour médicaments à l'épreuve des enfants (10) selon la revendication 15 comprenant en outre :
le fait de doter le blister (20) d'une première région (60) et d'une seconde région (60'), chacune des première et seconde régions comprenant au moins l'un de la pluralité de compartiments (40) ;
le fait de doter la boîte (150) d'une première région (194) et d'une seconde région (194'), chacune des première et seconde régions comprenant au moins l'une de la pluralité d'ouvertures (170) ;
l'alignement de la première région (60) du blister (20) avec la première région (194) de la boîte (150) ;
l'alignement de la seconde région (60') du blister (20) avec la seconde région (194') de la boîte (150) ;
l'impression sur la première région (194) de la boîte (150) d'une première instruction pour l'administration du médicament (42) fixé à l'intérieur de l'au moins un de la pluralité de compartiments (40) de la première région (194) ; et
l'impression sur la seconde région (194') de la boîte (150) d'une seconde instruction pour l'administration du médicament (42) fixé à l'intérieur de l'au moins un de la pluralité de compartiments (40) de la seconde région (194').

20. Procédé de distribution d'un médicament (42) fixé à l'intérieur d'un récipient pour médicaments à l'épreuve des enfants (10) à un utilisateur, le procédé comprenant :
la fourniture d'un récipient (10) comprenant une boîte (150), un curseur (100), et un blister (20), le curseur (100) étant fixé à la boîte (150), et le blister (20) étant fixé au curseur (100) ;
l'application d'une force sur au moins un compartiment d'une pluralité de compartiments (40) du blister (20), chacun de la pluralité de compartiments (40) étant aligné avec l'une complémentaire d'une pluralité d'ouvertures (170) dans une première paroi (158) de la boîte (150) ;
la rupture d'un opercule (54) de l'au moins un compartiment (40) pour déplacer le médicament (42) contenu à l'intérieur de l'au moins un compartiment (40) ;
l'expulsion du médicament (42) à travers une ouverture (116) dans la cavité (112) du curseur (100), l'ouverture (116) étant complémentaire de l'au moins un compartiment (40) ; et
l'expulsion du médicament (42) à travers une perforation (178) dans une seconde paroi (162) de la boîte (150), la perforation (178) étant complémentaire de l'au moins un compartiment (40).
